(19) Europäisches Patentamt / European Patent Office / Office européen des brevets

(11) **EP 3 134 374 B1**

(12) **EUROPÄISCHE PATENTSCHRIFT**

(45) Veröffentlichungstag und Bekanntmachung des Hinweises auf die Patenterteilung:
**22.05.2019   Patentblatt 2019/21**

(21) Anmeldenummer: **14812774.9**

(22) Anmeldetag: **18.12.2014**

(51) Int Cl.:
*G01L 13/02* (2006.01)   *G01L 9/00* (2006.01)
*G01L 9/06* (2006.01)   *G01L 19/04* (2006.01)
*G01L 19/00* (2006.01)   *G01L 19/14* (2006.01)
*G01L 19/06* (2006.01)   *C04B 37/02* (2006.01)

(86) Internationale Anmeldenummer:
**PCT/EP2014/078599**

(87) Internationale Veröffentlichungsnummer:
**WO 2015/161904 (29.10.2015 Gazette 2015/43)**

(54) **DRUCKSENSOR MIT EINEM KERAMISCHEN GRUNDKÖRPER**

PRESSURE SENSOR WITH A CERAMIC BASE BODY

CAPTEUR DE PRESSION COMPRENANT UN CORPS DE BASE EN CÉRAMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.04.2014   DE 102014105698**

(43) Veröffentlichungstag der Anmeldung:
**01.03.2017   Patentblatt 2017/09**

(73) Patentinhaber: **Endress+Hauser SE+Co. KG
79689 Maulburg (DE)**

(72) Erfinder:
• **DREWES, Ulfert
79379 Müllheim (DE)**

• **SCHMIDT, Elke
79713 Bad Säckingen (DE)**
• **UEHLIN, Thomas
79650 Schopfheim (DE)**
• **BERLINGER, Andrea
76532 Baden-Baden (DE)**

(74) Vertreter: **Andres, Angelika Maria
Endress+Hauser (Deutschland) AG+Co. KG
PatServe
Colmarer Strasse 6
79576 Weil am Rhein (DE)**

(56) Entgegenhaltungen:
**WO-A1-2014/049119      US-A- 3 305 923
US-A1- 2007 214 865      US-B1- 6 418 793**

EP 3 134 374 B1

**Beschreibung**

Die vorliegende Erfindung betrifft einen Drucksensor mit einem Grundkörper aus Keramik, einer auf dem Grundkörper angeordneten Messmembran, einer im Grundkörper unter der Messmembran eingeschlossenen Druckmesskammer, und mindestens einem mit dem Grundkörper über eine druckdichte mechanische Verbindung verbundenen Metallkörper.

Drucksensoren mit keramischen Grundkörpern werden zur Messung von Drücken eingesetzt. Zu diesen Drucksensoren zählen Absolutdrucksensoren, die den absoluten, auf die Messmembran einwirkenden Druck gegen Vakuum messen, Relativdrucksensoren, die den auf die Messmembran einwirkenden Druck bezogen auf einen der Druckmesskammer zugeführten Referenzdruck, wie z.B. dem aktuellen Atmosphärendruck, messen, sowie Differenzdrucksensoren, die eine Druckdifferenz zwischen einem auf eine erste Seite der Messmembran einwirkenden ersten Druck und einem auf eine zweite Seite der Messmembran einwirkenden zweiten Druck erfassen.

Drucksensoren finden weit gefächerte Anwendung in nahezu allen Bereichen der industriellen Messtechnik. Keramische Grundkörper bieten den Vorteil, dass sie nicht nur thermisch, chemisch und mechanisch sehr beständig sind, sondern darüber hinaus auch eine sehr hohe Druckfestigkeit aufweisen. Drucksensoren mit keramischen Grundkörpern müssen am Einsatzort montiert und über entsprechende Prozessanschlüsse oder Druckzuleitungen je nach Sensortyp mit dem zu messenden Druck, dem zu messenden Druck und dem Referenzdruck, bzw. mit den beiden Drücken, deren Differenz gemessen werden soll, beaufschlagt werden.

Hierzu werden Drucksensoren z.B. in mit Prozessanschlüssen ausgestatteten Gehäuse eingesetzt, oder auf andere Weise mit Prozessanschlüssen und/oder Druckzuleitungen verbunden. Gehäuse, Prozessanschlüsse und Druckzuleitungen sind regelmäßig Metallkörper, z.B. aus Edelstahl.

Der keramische Grundkörper ist somit regelmäßig mit mindestens einem Metallkörper über eine druckdichte Verbindung mechanisch zu verbinden. Dabei besteht das Problem, dass Keramik einen thermischen Ausdehnungskoeffizienten aufweist, der sich deutlich von dem thermischen Ausdehnungskoeffizienten der üblicherweise eingesetzten Metallkörper unterscheidet. Keramische Werkstoffe weisen einen thermischen Ausdehnungskoeffizienten auf, der typischer Weise in der Größenordnung von 5 ppm/K bis 8 ppm/K liegt. Demgegenüber weisen Edelstähle einen deutlich höheren thermischen Ausdehnungskoeffizienten in der Größenordnung von 16 ppm/K auf. Während druckdichte mechanische Verbindungen von zumindest ähnlichen thermischen Ausdehnungskoeffizienten aufweisenden Elementen durch Fügungen, wie z.B. Schweißungen, Lötungen oder Klebungen, realisiert werden können, treten bei Fügungen zwischen Elementen mit unterschiedlichen thermischen Ausdehnungskoeffizienten thermomechanische Spannungen auf, die die Fügung belasten und im schlimmsten Fall sogar zu einer Zerstörung der Fügung führen können. Thermomechanische Spannungen sind umso größer, je größer der Temperaturbereich ist, in dem die Elemente eingesetzt werden. Dementsprechend können Metall-Keramik-Fügungen aufweisende Drucksensoren allenfalls in einem sehr begrenzten Temperaturbereich eingesetzt werden.

Darüber hinaus würden durch Metall-Keramik-Fügungen bedingte thermomechanische Spannungen im Bereich oder in der Nähe der Messmembran Verspannungen der Messmembran verursachen, die wiederum die Messgenauigkeit des Drucksensors beeinträchtigen können. Demgegenüber führen unter Zwischenfügung elastischer Elemente, wie zum Beispiel Elastomerdichtungen, ausgeführte mechanische Einspannungen zu deutlich geringeren thermomechanischen Spannungen. Diese Form der druckdichten mechanischen Verbindung ist jedoch in der Regel nur zur Einspannung von keramischen Druckmesszellen in ein Gehäuse einsetzbar, wohingegen sie für den Anschluss von Druckzuleitungen an durch den keramischen Grundkörper hindurch zur Druckmesskammer verlaufende Bohrungen in der Regel ungeeignet sind. Darüber hinaus altern Elastomere und müssen am Ende ihrer Lebensdauer ausgetauscht werden.

US 6 418 793 B1 offenbart einen Differenzdrucksensor für kleine Druckdifferenzen in der Größenordnung von 1 Pa, wobei der Differenzdrucksensor einen Differentialkondensator mit zwei ortsfesten Elektroden und einer beweglichen Mittenelektrode die durch eine Messmembran zwischen den ortsfesten Elektroden gebildet wird.

WO 2014/049119 A1 2014049119 beschreibt ein Verfahren zum Verbinden von unterschiedlichen Materialien (spezielle Keramik mit einem anderen Werkstoff) mit Hilfe eines reaktiven Glases oder einer reaktiven Glaskeramik.

US 3 305 923 A offenbart ein Verfahren zum Herstellen eines metallischen Übergangstücks aus zwei Metallen, wobei der Wärmeausdehnungskoeffizient an einem ersten Ende des Übergangstücks dem des ersten Metalls entspricht, und wobei der Wärmeausdehnungskoeffizient an einem zweiten Ende des Übergangstücks dem des zweiten Metalls entspricht.

US 2007/214865 A1 offenbart den Einsatz von Zwischenschichten aus Mischkeramiken zwischen zwei zu verbindenden unterschiedlichen Keramiken (Al2O3 und ZrO2) und ihre Herstellung.

Es ist eine Aufgabe der Erfindung, einen Drucksensor mit einem Grundkörper aus Keramik und mindestens einem mit dem Grundkörper über eine druckdichte, vorzugsweise elastomerfreie, mechanische Verbindung verbundenen Metallkörper, anzugeben, bei dem durch die Verbindung bedingte thermomechanische Spannungen möglichst gering sind.

Hierzu umfasst die Erfindung einen Drucksensor, mit

- einem Grundkörper aus Keramik,
- einer auf dem Grundkörper angeordneten Messmembran,
- einer im Grundkörper unter der Messmembran eingeschlossenen Druckmesskammer, und
- mindestens einem mit dem Grundkörper über eine druckdichte mechanische Verbindung verbundenen Metallkörper,
  und zeichnet sich dadurch aus, dass
- die druckdichte mechanische Verbindung einen zwischen dem Grundkörper und dem Metallkörper angeordneten Anpassungskörper umfasst,
- der Anpassungskörper einen thermischen Ausdehnungskoeffizienten aufweist, der entlang des Anpassungskörpers in vom Grundkörper zum Metallkörper verlaufender Richtung von einem einem thermischen Ausdehnungskoeffizienten der Keramik des Grundkörpers entsprechenden Ausdehnungskoeffizienten auf einen dem thermischen Ausdehnungskoeffizienten des Metallkörpers entsprechenden Ausdehnungskoeffizienten ansteigt, und
- der Anpassungskörper durch eine erste Fügung mit dem Grundkörper und durch eine zweite Fügung mit dem Metallkörper verbunden ist, wobei:

  - der Anpassungskörper in vom Grundkörper zum Metallkörper verlaufender Richtung eine Höhe (h), und senkrecht dazu eine Breite (d) aufweist, und
  - ein Produkt aus einem Verhältnis von der Breite (d) des Anpassungskörpers zur Höhe (h) des Anpassungskörpers und dem Betrag der Differenz ($\Delta\alpha$) der thermischen Ausdehnungskoeffizienten ($\alpha_K$, $\alpha_M$) der Keramik des Grundkörpers und des Metalls des Metallkörpers kleiner als eine Konstante ($\xi$) mit der Dimension 1/K ist, wobei
  - die Konstante ($\xi$) kleiner als 0,1%/K, insbesondere kleiner 500 ppm/K, insb. kleiner als 250 ppm/K, insb. kleiner als 125 ppm/K, insb. kleiner als 60 ppm/K ist, und/oder
  - die Konstante ($\xi$) gleich einem Quotient aus einem dimensionslosen Verformungsparameter (C) und einer Temperaturdifferenz ($\Delta$T) zwischen einer maximalen und einer minimalen Temperatur ($T_{max}$, $T_{min}$), bei der der Drucksensor eingesetzt werden soll, ist, und der Verformungsparameter kleiner als 4%, insb. kleiner als 2%, insb. kleiner als 1% ist.

Weiterhin umfasst die Erfindung einen Drucksensor, mit

- einem Grundkörper aus Keramik,
- einer auf dem Grundkörper (1) angeordneten Messmembran,

- einer im Grundkörper unter der Messmembran eingeschlossenen Druckmesskammer, und
- mindestens einem mit dem Grundkörper über eine druckdichte mechanische Verbindung verbundenen Metallkörper,
- wobei die druckdichte mechanische Verbindung einen zwischen dem Grundkörper und dem Metallkörper angeordneten Anpassungskörper umfasst,
- der Anpassungskörper einen thermischen Ausdehnungskoeffizienten aufweist, der entlang des Anpassungskörpers in vom Grundkörper zum Metallkörper verlaufender Richtung (z) von einem thermischen Ausdehnungskoeffizienten ($\alpha_K$) der Keramik des Grundkörpers entsprechenden Ausdehnungskoeffizienten auf einen dem thermischen Ausdehnungskoeffizienten ($\alpha_M$) des Metallkörpers entsprechenden Ausdehnungskoeffizienten ansteigt, und
- der Anpassungskörper durch eine erste Fügung mit dem Grundkörper und durch eine zweite Fügung mit dem Metallkörper verbunden ist,
- dadurch gekennzeichnet, dass
  - - der Anpassungskörper ein aus aufeinander angeordneten Schichten (Si) aufgebauter Anpassungskörper ist,
- die einzelnen Schichten (Si) jeweils eine sich parallel zur Flächennormalen auf die Schicht (Si) erstreckende Schichtdicke (s) und eine sich senkrecht zur Flächennormalen auf die Schicht (Si) erstreckende Breite ($d_s$) aufweisen, und
- das Produkt aus dem Verhältnis der Breite ($d_s$) der jeweiligen Schicht (Si) zu deren Schichtdicke (s) und dem Betrag der Differenz ($\Delta\alpha_s$) der thermischen Ausdehnungskoeffizienten der an diese Schicht (Si) angrenzenden Schichten ($S_{i-1}$, $S_{i+1}$) kleiner als eine Konstante ($\xi$) mit der Dimension 1/K ist, wobei
- die Konstante ($\xi$) kleiner als 0,1 %/K, insbesondere kleiner 500 ppm/K, insb. kleiner als 250 ppm/K, insb. kleiner als 125 ppm/K, insb. kleiner als 60 ppm/K ist, und/oder
- die Konstante ($\xi$) gleich einem Quotient aus einem dimensionslosen Verformungsparameter (C) und einer Temperaturdifferenz ($\Delta$T) zwischen einer maximalen und einer minimalen Temperatur ($T_{max}$, $T_{min}$), bei der der Drucksensor eingesetzt werden soll, ist, und der Verformungsparameter kleiner als 4%, insb. kleiner als 2%, insb. kleiner als 1% ist.

Eine Weiterbildung der Erfindung zeichnet sich dadurch aus, dass

- der Anpassungskörper aufeinander angeordnete Schichten unterschiedlicher Zusammensetzung, insb. durch Lasersintern von metallische und/oder keramische Anteile enthaltenden Pulverschichten aufeinander aufgebrachte Schichten, aufweist, und
- die Schichten einen Keramikanteil aufweisen, der größer gleich 0 % und kleiner gleich 100 % ist, und einen Metallanteil aufweisen, der größer gleich 0 %

und kleiner gleich 100 % ist, wobei

- der Keramikanteil in vom Grundkörper zum Metallkörper hin verlaufender Richtung von Schicht zu Schicht abnimmt, und
- der Metallanteil in vom Grundkörper zum Metallkörper hin verlaufender Richtung von Schicht zu Schicht ansteigt.

Eine weitere Weiterbildung der Erfindung zeichnet sich dadurch aus, dass

- der Anpassungskörper ein aus Schichten aufgebauter Sinterkörper ist, und die erste Fügung eine durch Aufsintern, insb. durch Lasersintern, einer dem Grundkörper zugewandten äußersten Schicht des Anpassungskörpers auf dem Grundkörper gebildete Fügung ist, oder
- die erste Fügung eine Aktivhartlötung, insb. eine mittels eines ternären eine Zr-Ni-Legierung und Titan aufweisenden Aktivhartlots ausgeführte Aktivhartlötung ist, oder
- die erste Fügung eine Glaslötung ist.

Gemäß einer weiteren Weiterbildung ist die zweite Fügung eine Schweißung oder eine Glaslötung.

Eine erste Variante der Erfindung zeichnet sich dadurch aus, dass

- die Messmembran aus Metall besteht und einer der Metallkörper ist, und
- ein äußerer Rand einer der Messmembran zugewandten Stirnseite des Grundkörpers über die erste Fügung, den Anpassungskörper und die zweite Fügung mit einem äußeren Rand der dem Grundkörper zugewandten Seite der Messmembran verbunden ist.

Gemäß einer Ausgestaltung der ersten Variante

- ist der Anpassungskörper ein zu einem Ring geschlossener Anpassungskörper mit rechteckigem Querschnitt, oder
- weist eine der Messmembran zugewandte Stirnseite des Grundkörpers einen als Membranbett ausgebildeten Bereich auf, und der Anpassungskörper weist eine die Druckmesskammer außenseitlich umgebende Innenkontur auf, durch die das Membranbett nach außen fortgesetzt ist.

Eine zweite Variante der Erfindung zeichnet sich dadurch aus, dass

- im Grundkörper eine durchgehende, in der Druckmesskammer mündende Bohrung vorgesehen ist,
- eine an die Bohrung angeschlossenen Druckzufuhrleitung vorgesehen ist,
- die Druckzufuhrleitung an deren dem Grundkörper zugewandten Ende einen metallischen, eine Durchtrittsöffnung aufweisenden Abschluss aufweist, der einen der Metallkörper bildet,

- der Grundkörper über die erste Fügung, den Anpassungskörper und die zweite Fügung mit dem Abschluss verbunden ist, und
- der Anpassungskörper einen Innenraum aufweist, durch den ein Innenraum der Bohrung über die Durchtrittsöffnung im Abschluss mit einem Innenraum der Druckzufuhrleitung verbunden ist.

Eine dritte Variante der Erfindung zeichnet sich dadurch aus, dass

- der Grundkörper in einem Gehäuse angeordnet ist,
- das Gehäuse ein den Grundkörper außenseitlich umschließendes, vom Grundkörper beabstandetes Gehäusesegment, und eine damit verbundene, sich radial nach innen erstreckende, einen der Metallkörper bildende Schulter aus Metall, insb. aus Edelstahl, insb. aus nickelhaltigem austenitischem Edelstahl, umfasst, und
- ein innerer Rand der Schulter über die druckdichte Verbindung mit einem äußeren der Schulter zugewandten Rand des Grundkörpers verbunden ist, wobei
- eine dem Grundkörper zugewandte Stirnseite des Anpassungskörpers über die erste Fügung mit einem äußeren Rand der der Schulter zugewandten Stirnseite des Grundkörpers verbunden ist, und
- eine der Schulter zugewandte Stirnseite des Anpassungskörpers über die zweite Fügung mit einer in das Gehäuse hinein weisenden Seite eines inneren Randes der Schulter verbunden ist.

Eine Weiterbildung der dritten Variante besteht darin, dass

- die Messmembran aus Keramik besteht,
- ein äußerer Rand der Messmembran über eine druckdichte Verbindung mit einer vom Grundkörper abgewandten Seite des inneren Randes der Schulter verbunden ist,
- die druckdichte Verbindung über einen weiteren Anpassungskörper, insb. einen identisch zu dem zwischen Grundkörper und Schulter angeordneten Anpassungskörper ausgebildeten weiteren Anpassungskörper, erfolgt,
- der weitere Anpassungskörper einen thermischen Ausdehnungskoeffizient aufweist, der in von der Messmembran zur Schulter verlaufender Richtung von einem einem thermischen Ausdehnungskoeffizienten der Keramik der Messmembran entsprechenden Ausdehnungskoeffizienten auf einen dem thermischen Ausdehnungskoeffizienten des Metalls der Schulter entsprechenden Ausdehnungskoeffizienten ansteigt, und
- der weitere Anpassungskörper eine der Messmembran zugewandte Stirnseite aufweist, die durch eine erste Fügung, insb. eine durch Aufsintern einer äußeren

Schicht des Anpassungskörpers auf der Messmembran gebildete Fügung, mit der Messmembran verbunden ist, und eine der Schulter zugewandte Stirnseite aufweist, die durch eine zweite Fügung, insb. eine Schweißung, mit der Schulter verbunden ist.

Gemäß einer Weiterbildung der dritten Variante oder deren Weiterbildung ist die Schulter in parallel und/oder senkrecht zur Flächennormalen auf die Messmembran verlaufender Richtung federelastisch.

Gemäß einer bevorzugten Ausgestaltung der Erfindung

- ist der Anpassungskörper ein aus Schichten aufgebauter Anpassungskörper, und
- ist eine Anzahl der Schichten größer gleich einer Differenz zwischen dem thermischen Ausdehnungskoeffizienten des Metallkörpers und dem thermischen Ausdehnungskoeffizienten des keramischen Grundkörpers geteilt durch 2 ppm/K, insbesondere größer gleich der Differenz geteilt durch 1 ppm/K, insb. größer gleich dem zweifachen der Differenz geteilt durch 1 ppm/K.

Gemäß einer weiteren bevorzugten Ausgestaltung

- ist der Anpassungskörper ein aus Schichten aufgebauter Anpassungskörper, und
- die Schichten weisen eine Schichtdicke von nicht weniger als 10 $\mu$m, insbesondere nicht weniger als 20 $\mu$m, insb. nicht weniger als 40 $\mu$m auf, und von nicht mehr als 400 $\mu$m, insbesondere nicht mehr als 200 $\mu$m, insb. nicht mehr als 100 $\mu$m auf.

Die Erfindung weist den Vorteil auf, dass die unterschiedlichen thermischen Ausdehnungskoeffizienten von Metallkörper und keramischem Grundkörper über den Anpassungskörper schrittweise ineinander überführt werden. Dies bewirkt eine deutliche Reduktion von durch die unterschiedlichen Ausdehnungskoeffizienten von Metallkörper und keramischem Grundkörper bedingten temperaturabhängigen Spannungen, sowohl innerhalb der über den Anpassungskörper ausgeführten Verbindung, als auch in den an die Verbindung angrenzenden Bereichen des Drucksensors.

Da Grundkörper und Metallkörper jeweils an eine Stirnseite des Anpassungskörpers angrenzen, die einen dem thermischen Ausdehnungskoeffizienten des jeweiligen Körpers entsprechenden thermischen Ausdehnungskoeffizienten aufweist, verbinden die Fügungen zwischen Anpassungskörper und Grundkörper, sowie zwischen Anpassungskörper und Metallkörper jeweils Grenzflächen mit gleichem oder zumindest sehr ähnlichem thermischen Ausdehnungskoeffizienten. Dementsprechend sind die Fügungen nur sehr geringen temperaturabhängigen Belastungen ausgesetzt. Die erfindungsgemäßen Drucksensoren können somit dauerhaft in einem vergleichsweise großen Temperaturbereich, insb. in einem Temperaturbereich von - 40 °C bis + 130 °C, eingesetzt werden. Der Einsatz von Elastomeren, inklusive der damit verbundenen Nachteile, ist nicht erforderlich.

Die Erfindung und deren Vorteile werden nun anhand der Figuren der Zeichnung, in denen drei Ausführungsbeispiele dargestellt sind, näher erläutert. Gleiche Elemente sind in den Figuren mit den gleichen Bezugszeichen versehen.

Fig. 1 zeigt: einen erfindungsgemäßen Differenzdrucksensor;

Fig. 2 zeigt: eine Vergrößerung der in Fig. 1 eingekreisten druckdichten Verbindung;

Fig. 3 zeigt: den Differenzdrucksensor von Fig. 1 mit im Grundkörper integriertem und durch den Anpassungskörper nach außen fortgesetztem Membranbett;

Fig. 4 zeigt: einen erfindungsgemäßen Relativdrucksensor; und

Fig. 5 zeigt: eine Vergrößerung der in Fig. 4 eingekreisten druckdichten Verbindungen.

Die Erfindung betrifft Drucksensoren mit einem Grundkörper aus Keramik, einer auf dem Grundkörper angeordneten Messmembran, einer im Grundkörper unter der Messmembran eingeschlossenen Druckmesskammer, und mindestens einem mit dem Grundkörper über eine druckdichte mechanische Verbindung verbundenen Metallkörper.

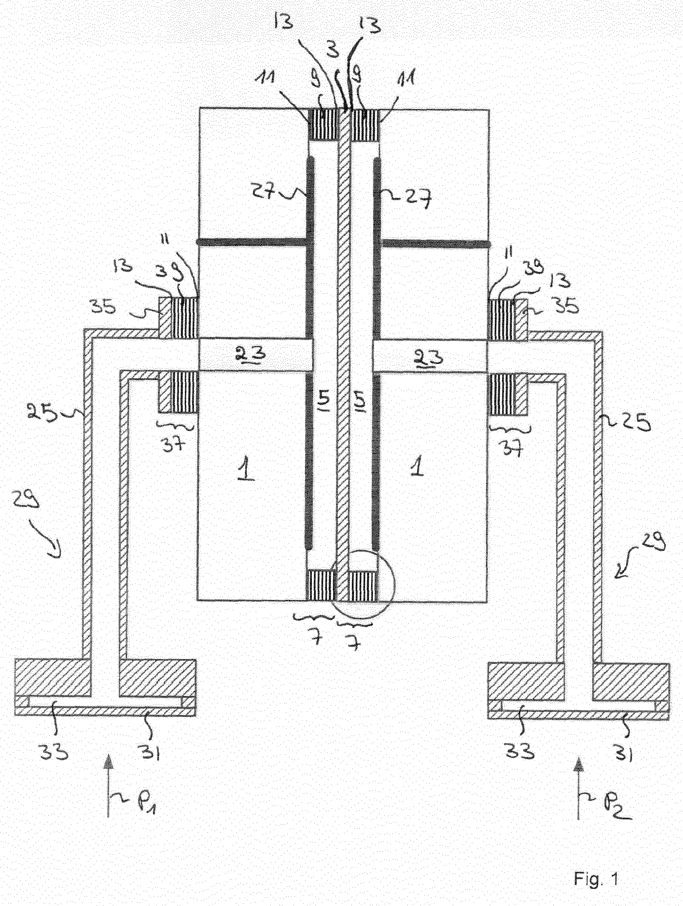

Fig. 1 zeigt als erstes Ausführungsbeispiel hierzu einen erfindungsgemäßen Differenzdrucksensor, der einen ersten und einen identisch hierzu ausgebildeten zweiten keramischen Grundkörper 1 aufweist. Die Grundkörper 1 bestehen zum Beispiel aus Aluminiumoxid ($Al_2O_3$). Alternativ können sie auch aus einem anderen keramischen Werkstoff, wie z.B. Siliziumcarbid-Keramik (SiC) oder Spinell bestehen.

Zwischen den beiden Grundkörpern 1 ist eine Messmembran 3 angeordnet, unter der in jedem der beiden Grundkörper 1 jeweils eine Druckmesskammer 5 eingeschlossen ist. In dem Ausführungsbeispiel von Fig. 1 besteht die Messmembran 3 aus Metall, zum Beispiel aus einem Edelstahl oder einem Federstahl, und bildet einen der Metallkörper des Differenzdrucksensors.

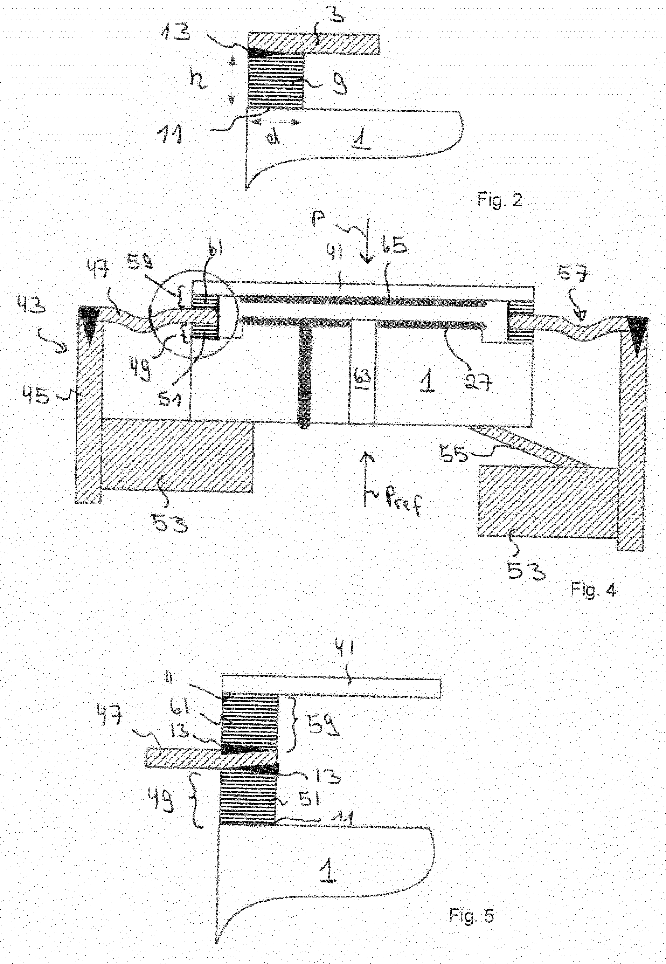

Die Messmembran 3 weist einen äußerer Rand auf, dessen eine Seite über eine erste druckdichte mechanische Verbindung 7 mit einem äußeren Rand der der Messmembran 3 zugewandten Stirnseite des ersten Grundkörpers 1, und dessen zweite Seite über eine zweite - vorzugsweise identisch ausgebildete - druckdichte mechanische Verbindung 7 mit einem äußeren Rand der der Messmembran 3 zugewandten Stirnseite des zweiten Grundkörper 1 verbunden ist. Beide Verbindungen 7 erfolgen jeweils über einen zwischen der Messmembran 3 und dem jeweiligen Grundkörper 1 angeordneten Anpassungskörper 9. Fig. 2 zeigt eine vergrößerte Darstellung der in Fig. 1 eingekreisten druckdichten Verbindung 7. Die beiden Anpassungskörper 9 sind jeweils zu einem Ring geschlossene Anpassungskörper, und weisen in dem in Fig. 1 dargestellten Ausführungsbeispiel einen rechteckigen Querschnitt auf.

Erfindungsgemäß weisen die Anpassungskörper 9 jeweils einen thermischen Ausdehnungskoeffizient auf, der in vom jeweiligen Grundkörper 1 zum Metallkörper - hier also vom jeweiligen Grundkörper 1 zur Messmembran 3 - verlaufender Richtung von einem dem thermischen Ausdehnungskoeffizienten $\alpha_k$ der Keramik des Grundkörpers 1 entsprechenden Ausdehnungskoeffizienten auf einen dem thermischen Ausdehnungskoeffizienten $\alpha_M$ des Metallkörpers entsprechenden Ausdehnungskoeffizienten ansteigt.

Die Anpassungskörper 9 bestehen hierzu vorzugsweise aus einer Anzahl N aufeinander angeordneten Schichten $S_i$ unterschiedlicher Zusammensetzung. Die einzelnen Schichten $S_i$ verlaufen parallel zueinander und parallel zur Messmembran 3. Die Zusammensetzung der einzelnen Schichten $S_i$ wird derart vorgegeben, dass die jeweils an den Grundkörper 1 angrenzende äußerste Schicht $S_1$ der Anpassungskörper 9 einen thermischen Ausdehnungskoeffizienten $\alpha_{S1}$ aufweist, der dem Ausdehnungskoeffizienten $\alpha_K$ der Keramik des Grundkörpers 1 entspricht, und ausgehend von dieser äußersten Schicht $S_1$ von Schicht zu Schicht schrittweise derart auf den thermischen Ausdehnungskoeffizienten $\alpha_M$ des Metallkörpers ansteigt, dass die an die Messmembran 3 angrenzende äußerste Schicht $S_N$ einen thermischen Ausdehnungskoeffizienten $\alpha_{SN}$ aufweist, der dem thermischen Ausdehnungskoeffizienten $\alpha_M$ des Metallkörpers - hier also der Messmembran 3 - entspricht.

Hierzu weisen die Schichten $S_i$ jeweils einen Keramikanteil auf, der größer gleich 0% und kleiner gleich 100 % ist, und einen Metallanteil auf, der größer gleich 0% und kleiner gleich 100 % ist. Die Anteile sind vorzugsweise derart vorgegeben, dass der Keramikanteil der Schichten $S_i$ in vom Grundkörper 1 zum Metallkörper verlaufender Richtung z von Schicht zu Schicht abnimmt, während der Metallanteil der Schichten $S_i$ in vom Grundkörper 1 zum Metallkörper verlaufender Richtung z von Schicht zu Schicht ansteigt. Ordnet man der dem jeweiligen Grundkörper 1 zugewandten äußersten Schicht $S_1$ der Anpassungskörper 9 die Koordinate z=0, und der der Messmembran 3 zugewandten äußersten Schichte $S_N$ die Koordinate z=h zu, wobei h gleich der Höhe des Anpassungskörpers 9 ist, beträgt der Keramikanteil einer Schicht $S_i$ mit der mittleren axialen Koordinate z beispielsweise 100% x (1-z/h) und der Metallanteil

dieser Schicht $S_i$ beträgt 100% x (z/h).

Vorzugsweise sind die Anpassungskörper 9 Sinterkörper, deren Schichten $S_i$ zum Beispiel durch Lasersintern von Pulverschichten entsprechender von Schicht zu Schicht unterschiedlicher Zusammensetzung erzeugt werden. Hierzu kann zum Beispiel das in der IMW- Industriemitteilung Nr. 29 (2004) von Trenke mit dem Titel "Selektives Lasersintern von metallisch/keramischen Schichtstrukturen" beschriebene Laser-Sinterverfahren eingesetzt werden. Die Komponenten können hierzu in Form von mikroskaligen Granulaten bereitgestellt werden, deren Korngröße vorzugsweise nicht mehr als 20 $\mu$m und besonders bevorzugt nicht mehr als 10 $\mu$m beträgt. Zum Präparieren einer Schicht wird die koordinaten-abhängige Mischung der Granulate auf den bereits verfestigten Schichten aufgetragen und durch Lasersintern verfestigt. Die gewünschte Zusammensetzung der jeweiligen Schicht $S_i$ kann dadurch erzeugt werden, dass eine Metallpulver und Keramikpulver im gewünschten Mischungsverhältnis in durchmischter Form enthaltende Pulverschicht aufgebracht und durch Lasersintern verfestigt wird. Alternativ kann die Zusammensetzung dadurch erzielt werden, dass die entsprechende Menge Metallpulver und die entsprechende Menge Keramikpulver jeweils als Pulverschicht entsprechender Dicke aufeinander aufgebracht werden, und die beiden Pulverschichten durch Lasersintern durchmischt und verfestigt werden. Ggf. kann der Sinterkörper nach erfolgter Präparation unter Druck bei hoher Temperatur gehalten werden, um das Gefüge zu verdichten.

Die Unterschiede der thermischen Ausdehnungskoeffizienten $\alpha_{Si}$, $\alpha_{Si+1}$ aneinander angrenzender Schichten $S_i$, $S_{i+1}$ der Anpassungskörper 9 sind umso geringer, je größer die Anzahl N der Schichten S ist. Je geringer diese Unterschiede sind, umso geringer sind auch die sich aufgrund der unterschiedlichen thermischen Ausdehnungskoeffizienten ausbildenden temperaturabhängigen Spannungen. Die Anzahl N der Schichten wird daher in Abhängigkeit von der Differenz $\Delta\alpha = \alpha_M - \alpha_K$ der über den Anpassungskörper 9 schrittweise aneinander anzupassenden thermischen Ausdehnungskoeffizienten $\alpha_M$, $\alpha_K$ des Metallkörpers und des keramischen Grundkörpers 1 vorzugsweise derart vorgegeben, das die Anzahl N nicht weniger als $(\Delta\alpha)/(2\ \mathrm{ppm/K})$, insbesondere nicht weniger als $(\Delta\alpha)/(1\ \mathrm{ppm/K})$ und bevorzugt nicht weniger als $(2\Delta\alpha)/(1\ \mathrm{ppm/K})$ beträgt.

Jeder Anpassungskörper 9 ist über eine erste, dessen dem jeweiligen Grundkörper 1 zugewandten Stirnseite mit dem äußeren Rand des Grundkörpers 1 verbindende Fügung 11 mit dem zugehörigen Grundkörper 1, und über eine zweite, dessen dem Metallkörper zugewandte Stirnseite mit dem Metallkörper verbindende Fügung 13 mit dem Metallkörper verbunden.

Die erste Fügung 11 zwischen Grundkörper 1 und Anpassungskörper 9 wird vorzugsweise dadurch realisiert, dass der Anpassungskörper 9 schichtweise auf dem Grundkörper 1 aufgebaut wird. Dabei bildet sich beim Lasersintern der äußersten Schicht $S_1$ auf dem jeweiligen Grundkörper 1 die erste Fügung 11 zwischen der dem Grundkörper 1 zugewandten äußersten Schicht $S_1$ und dem Grundkörper 1 aus.

Alternativ können die Anpassungskörper 9 als separate Bauteile gefertigt werden. In dem Fall ist die erste Fügung 11 zwischen Grundkörper 1 und Anpassungskörper 9 vorzugsweise eine Aktivhartlötung. Die Aktivhartlötung wird vorzugsweise mit einem eine Zr-Ni-Legierung und Titan aufweisenden ternären Aktivhartlot ausgeführt. Derartige Aktivhartlote sind aus der EP 0 490 807 A2 bekannt, und weisen den Vorteil eines an den thermischen Ausdehnungskoeffizienten der Keramik angepassten thermischen Ausdehnungskoeffizienten auf. Alternativ kann die erste Fügung 11 eine Glaslötung sein. Die zweite Fügung 13 ist vorzugsweise eine Schweißung. Alternativ kann die zweite Fügung 13 eine Aktivhartlötung oder eine Glaslötung sein.

Die Anpassungskörper 9 weisen im Querschnitt in einer parallel zur Flächennormalen auf die Schichten $S_i$ vom Grundkörper 1 zur Messmembran 3 verlaufenden Richtung z eine Höhe h und in einer senkrecht zur Flächennormalen auf die Schichten $S_i$ verlaufenden Richtung eine Breite d auf. Die Abmessungen der Anpassungskörper 9 werden vorzugsweise derart vorgegeben, dass das Produkt aus dem Verhältnis der Breite d der Anpassungskörper 9 zu deren Höhe h und dem Betrag der Differenz $\Delta\alpha$ der thermischen Ausdehnungskoeffizienten $\alpha_K$, $\alpha_M$ des Grundkörper 1 und des damit zu verbindenden Metallkörpers, hier der Messmembran 3, kleiner als eine vorgegebene Konstante $\xi$ mit der Dimension 1/K ist, für die gilt: $\xi < 0{,}1\%/K$, insbesondere $< 500$ ppm/K, vorzugsweise $< 250$ ppm/K, weiter bevorzugt $< 125$ ppm/K und besonders bevorzugt $< 60$ ppm/K:

$$\frac{d}{h} \cdot |\Delta\alpha| < \xi,$$

Die Konstante $\xi$ wird vorzugsweise als Quotient aus einem dimensionslosen Verformungsparameter C und einer Temperaturdifferenz $\Delta T$ gemäß:

$$\xi = \frac{C}{\Delta T}$$

bestimmt, wobei

- die Temperaturdifferenz $\Delta T$ gleich der Differenz $T_{max}$ - $T_{min}$ der maximalen und der minimalen Temperatur $T_{max}$, $T_{min}$ ist, bei der der Drucksensor eingesetzt werden soll, und
- C ein dimensionsloser Verformungsparameter ist, für den gilt: $C < 4\%$, insbesondere $C < 2\%$ und bevorzugt $C < 1\%$.

Dabei werden die einzelnen Schichten $S_i$ der Anpassungskörper 9 vorzugsweise derart bemessen, dass das Produkt aus dem Verhältnis der Breite $d_s$ der jeweiligen Schicht $S_i$ zu deren Schichtdicke s und der Betrag der Differenz $\Delta\alpha_s$ der thermischen Ausdehnungskoeffizienten $\alpha_{Si-1}$, $\alpha_{Si+1}$ der an diese Schicht $S_i$ angrenzenden Schichten $S_{i-1}$, $S_{i+1}$ ebenfalls kleiner als die oben genannte vorzugsweise als Quotient aus dem dimensionslosen Verformungsparameter C und der Temperaturdifferenz $\Delta T$ bestimmten Konstante $\xi$ ist. D. h.:

$$\frac{d_s}{s} \cdot |\Delta\alpha_s| < \xi$$

Dabei weisen die einzelnen Schichten $S_i$ vorzugsweise eine Schichtdicke s von nicht weniger als 10 $\mu$m, insbesondere nicht weniger als 20 $\mu$m und bevorzugt nicht weniger als 40 $\mu$m auf, und von nicht mehr als 400 $\mu$m, insbesondere nicht mehr als 200 $\mu$m und bevorzugt nicht mehr als 100 $\mu$m auf.

Nimmt man als Beispiel eine metallische Messmembran 3 aus Edelstahl mit einem thermischen Ausdehnungskoeffizienten $\alpha_M$ von 16 ppm/K und einen Grundkörper 1 aus Aluminiumoxid-Keramik mit einem thermischen Ausdehnungskoeffizienten $\alpha_K$ von 8 ppm/K, dann beträgt die Differenz $\Delta\alpha$ der thermischen Ausdehnungskoeffizienten 8 ppm/K. Hieraus ergibt sich eine bevorzugte Mindestanzahl $N \geq 2 \, \Delta\alpha \, /(1 \text{ ppm/K})$ von 16 Schichten. Bei den oben angegebenen besonders bevorzugten Schichtdicken von 40 $\mu$m bis 100 $\mu$m ergibt sich hieraus eine bevorzugte Mindesthöhe h der Anpassungskörper 9 von 640 $\mu$m bis 1,6 mm. Geht man von einem Temperaturbereich von - 40°C bis + 130 °C aus, in dem der Drucksensor eingesetzt werden soll, erhält man unter Anwendung des besonders bevorzugten Verformungsparameters C von 1% für die Konstante $\xi$ gemäß $\xi = C/\Delta T$ einen Wert von 58,88 ppm/K. Damit liegt die über die oben angeführte Bemessungsregel d/h $|\Delta\alpha|$ $< \xi$ berechenbare Breite d des Anpassungskörpers 9 bei einer Höhe h von 640 $\mu$m vorzugweise unterhalb von 4,8 mm.

Alternativ kann der Anpassungskörper 9 ein durch Sintern eines in einem Siebdruckverfahren hergestellten Rohlings hergestellter Sinterkörper sein. Die Herstellung des Rohlings erfolgt, indem die einzelnen Schichten in nacheinander ausgeführten Druckvorgängen aufeinander aufgedruckt werden, wobei die aufgedruckten Schichten jeweils z.B. durch Trocknung verfestigt werden, bevor sie mit der nächsten Schicht überdruckt werden.

Der im Siebdruckverfahren hergestellte Anpassungskörper 9 weist vorzugsweise Schichten mit einer Schichtdicke in der Größenordnung von wenigen Mikrometern auf.

Durch Sintern von im Siebdruckverfahren hergestellten, aus aufeinander angeordneten Schichten unterschiedlicher Zusammensetzung aufgebauten Rohlingen erzeugte dreidimensionale Sinterkörper sind zum Beispiel in der EP 0 627 983 B1 beschrieben. Darüber hinaus ist in einem Handout zu einem im Rahmen des am 2. und 3. Juli 2014 in Dresden abgehaltenen 9. Seminars für aktuelle Trends in der Aufbau und Verbindungstechnik von Herrn Herr Riecker vom IFAM der Fraunhofer Gesellschaft gehaltenen Vortrag mit dem Titel: '3D-Siebdruck Ein Verfahren zur Bauteilherstellung' eine dreidimensionale gradierte Struktur aus Stahl und Keramik dargestellt, deren Keramikanteil in einer Raumrichtung kontinuierlich abnimmt, und deren Stahlanteil in der gleichen Raumrichtung entsprechend zunimmt.

Der auf diese Weise hergestellte Anpassungskörper 9 kann genau wie bei dem vorherigen Ausführungsbeispiel aus aufeinander angeordneten Schichten unterschiedlicher in Verbindung mit dem vorherigen Ausführungsbeispiel beschriebener Zusammensetzung aufgebaut sein, deren Keramikanteil in vom Grundkörper 1 zum Metallkörper verlaufender Richtung von Schicht zu Schicht abnimmt, und deren Metallanteil in vom Grundkörper 1 zum Metallkörper verlaufender Richtung von Schicht zu Schicht ansteigt. Für diese Ausführungsform gelten die oben angegebenen Bemessungsangaben für die Anzahl der Schichten N, das Verhältnis der Breite d des Anpassungskörpers 9 zu dessen Höhe h, sowie das Verhältnis der Breite $d_S$ der einzelnen Schichten zu deren Schichtdicke s entsprechend, wobei sich die Bemessungsangaben hier auf die nach dem Sintern des Rohlings vorliegenden Abmessungen beziehen.

Alternativ kann der Anpassungskörper 9 aufeinander angeordnete Schichtfolgen aufweisen, die aus aufeinander angeordneten Schichten bestehen, die jeweils entweder ausschließlich aus Metall oder ausschließlich aus Keramik bestehen. Dabei wird die Anzahl der in den einzelnen Schichtfolgen enthaltenen ausschließlich aus Keramik bestehenden Schichten und die Anzahl der in den einzelnen Schichtfolgenden enthaltenen ausschließlich aus Metall bestehenden Schichten derart vorgegeben, dass der Keramikanteil der Schichtfolgen in vom Grundkörper 1 zum Metallkörper verlaufender Richtung von Schichtfolge zu Schichtfolge abnimmt, und der Metallanteil der Schichtfolgen in vom Grundkörper 1 zum Metallkörper verlaufender Richtung z von Schicht zu Schicht ansteigt. Hierbei weisen die Schichten vorzugsweise eine möglichst geringe Dicke, insb. eine Dicke in der Größenordnung von wenigen Mikrometern, insb. 2 $\mu$m bis 3 $\mu$m auf. Diese Ausführungsform bietet den Vorteil, dass nur zwei verschiedene Druckpasten, nämlich eine Keramik-Paste und eine Metall-Paste zur Erzeugung des Rohlings benötigt werden, und dass für das Aufdrucken der keramischen und der metallischen Schichten jeweils nur ein Sieb benötigt wird, das zwischen aufeinander folgenden Druckvorgängen nicht gereinigt werden muss.

In Verbindung mit im Siebdruckverfahren hergestellten Anpassungskörpern 9 werden die erste und die zweite Fügung 11, 13 vorzugsweise dadurch erzeugt, dass der Rohling zwischen Grundkörper 1 und Metallkörper angeordnet und dort gesintert wird.

Die Erfindung bietet den Vorteil, dass die Anpassungskörper 9 die unterschiedlichen thermischen Ausdehnungskoeffizienten von Metallkörper und Grundkörper 1 schrittweise aneinander angleichen. Dies bewirkt eine deutliche Reduktion temperaturbedingter Spannungen im Bereich der Fügungen 11, 13 und im Bereich der Messmembran 3. Damit ist es möglich, Edelstahl als Werkstoff für die Messmembran 3 einzusetzen, ohne dass die Gefahr besteht, dass die Fügungen 11, 13 aufgrund temperaturbedingter Spannungen über Gebühr belastet werden oder sogar brechen, und ohne dass die Messgenauigkeit durch temperaturabhängige Verspannungen im Bereich der Messmembran 3 wesentlich beeinträchtigt wird.

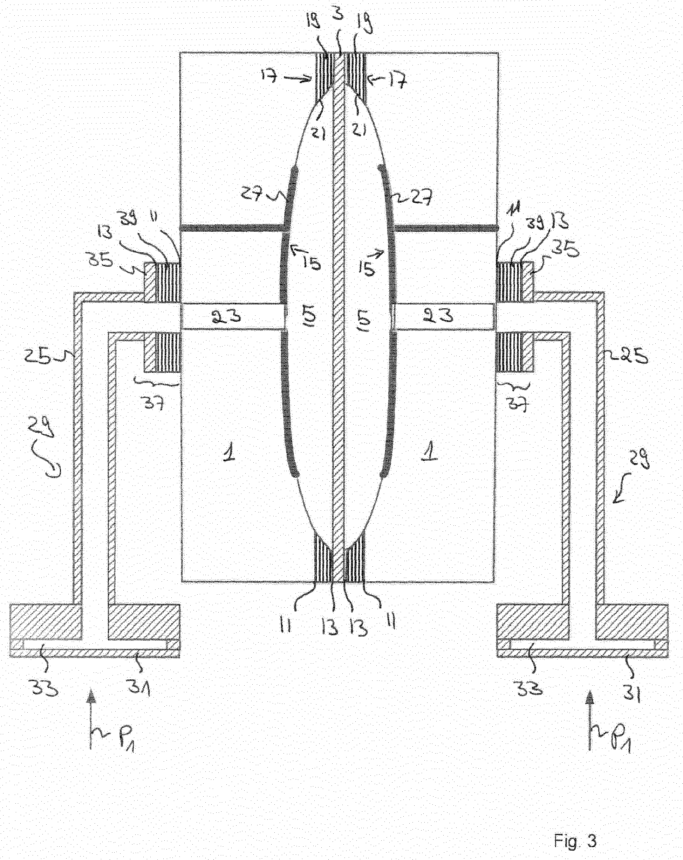

Fig. 3 zeigt ein weiteres Ausführungsbeispiel eines erfindungsgemäßen Differenzdrucksensors. Aufgrund der weitgehenden Übereinstimmung mit dem in Fig. 1 dargestellten Ausführungsbeispiel werden nachfolgend lediglich die bestehenden Unterschiede im Detail erläutert, und im Übrigen auf die Beschreibung zu Fig. 1 verwiesen. Im Unterschied zu dem in Fig. 1 dargestellten Ausführungsbeispiel weisen die beiden Grundkörper 1 hier auf deren der Messmembran 3 zugewandte Stirnseite jeweils einen als Membranbett 15 ausgebildeten Bereich auf. Die Membranbetten 15 dienen der Abstützung der Messmembran 3 im Fall einer darauf einwirkenden Überlast und weisen hierzu eine der Biegekontur der Messmembran 3 nachgebildete Oberflächenkontur auf. Jedes Membranbett 15 ist außenseitlich von einem planaren, parallel zur Messmembran 3 verlaufenden Rand 17 der Stirnseite des jeweiligen Grundkörpers 1 umgeben, auf dem auch hier jeweils ein Anpassungskörper 19 angeordnet ist.

In Verbindung mit mit Membranbetten 15 ausgestatteten Grundkörpern 1 weisen die Anpassungskörper 19 vorzugsweise eine die jeweilige Druckmesskammer 5 außenseitlich umschließende Innenkontur 21 auf, die das jeweilige Membranbetts 15 nach außen fortsetzt. Hierzu kann der Anpassungskörper 19 aus scheibenförmigen Schichten $S_i$ gleicher Außenabmessungen aufgebaut sein, deren Innendurchmesser ausgehend von der dem Grundkörper 1 zugewandten äußersten Schicht $S_1$ von Schicht zu Schicht entsprechend der Biegekontur der Messmembran 3 ansteigen. Dabei gelten die oben angeführten Bemessungsregeln für die Anzahl N der Schichten $S_i$, sowie die Schichtdicke s und die Breite $d_S$ der Schichten $S_i$ entsprechend.

In beiden Ausführungsbeispielen ist in jedem der beiden Grundkörper 1 jeweils eine durchgehende, in der zugehörigen Druckmesskammer 5 mündende Bohrung 23 vorgesehen, die durch den jeweiligen Grundkörper 1 hindurch zu dessen von der Messmembran 3 abgewandten Rückseite verläuft. Im Messbetrieb wird die dem ersten Grundkörper 1 zugewandte erste Seite der Messmembran 3 über eine an die Bohrung 23 im ersten Grundkörper 1 angeschlossene Druckzufuhrleitung 25 mit einem ersten Druck $p_1$, und die dem zweiten Grundkörper 1 zugewandte zweite Seite der Messmembran 3 über eine an die Bohrung 23 im zweiten Grundkörper 1 angeschlossene Druckzufuhrleitung 25 mit einem zweiten Druck $p_2$ beaufschlagt. Diese Druckbeaufschlagung bewirkt eine von der Differenz des ersten und des zweiten Drucks $p_1$, $p_2$ abhängige Durchbiegung der Messmembran 3, die mittels eines elektromechanischen Wandlers messtechnisch erfasst und in ein von der Differenz der Drücke $p_1$, $p_2$ abhängiges Messsignal umgewandelt wird.

Als Wandler eignet sich in beiden Ausführungsbeispielen z.B. ein kapazitiver Wandler, der einen ersten, durch die metallische Messmembran 3 und eine im ersten Grundkörper 1 angeordneten Gegenelektrode 27 gebildeten, Kondensator, und einen zweiten, durch die metallische Messmembran 3 und eine im zweiten Grundkörper 1 angeordneten Gegenelektrode 27 gebildeten, Kondensator aufweist. Beide Kondensatoren weisen jeweils eine von der Durchbiegung der Messmembran 3 abhängige Kapazität auf, die z.B. mittels hier nicht dargestellter Kapazitätsmessschaltungen bestimmt, und anhand einer vorab im Rahmen eines Kalibrationsverfahrens ermittelten Kennlinie einem auf die Messmembran 3 einwirkenden zu messenden Differenzdruck $\Delta p$ zugeordnet werden.

Die Druckzufuhrleitungen 25 können beispielsweise Bestandteil von den Druckmesskammern 5 vorgeschalteten Druckmittlern 29 sein. Die beiden Druckmittler 29 umfassen jeweils eine nach außen durch eine Trennmembran 31 abgeschlossene Druckempfangskammer 33, die über die daran angeschlossene Druckzufuhrleitung 25 und die Bohrung 23 an die zugehörige Druckmesskammer 5 angeschlossen ist. In dem Fall sind die Druckmesskammern 5, die Bohrungen 23, die Druckzufuhrleitungen 25 und die Druckempfangskammern 33 mit einer Druck übertragenden Flüssigkeit befüllt, über die der von außen auf die zugehörige Trennmembran 31 einwirkende Druck $p_1$, $p_2$ auf die zugehörige Druckmesskammer 5 übertragen wird.

Die Druckzufuhrleitungen 25 weisen an deren dem jeweiligen Grundkörper 1 zugewandten Ende einen Abschluss 35 aus Metall, z.B. aus einem Edelstahl, auf. Die Abschlüsse 35 sind Metallkörper, die mit dem zugehörigen Grundkörper 1 über eine druckdichte mechanische Verbindung 37 verbunden sind. Die Abschlüsse 35 sind beispielsweise an den Enden der Druckzufuhrleitungen 25 angebrachte Metallscheiben, die eine dem Innendurchmesser von Bohrung 23 und Druckzufuhrleitung 25 entsprechende Durchtrittsöffnung aufweisen. Auch diese Verbindungen 37 erfolgen jeweils über einen zwischen dem jeweiligen Grundkörper 1 und dem Abschluss 35 angeordneten Anpassungskörper 39, der einen thermischen Ausdehnungskoeffizient aufweist, der in vom Grundkörper 1 zum Metallkörper - hier zum Abschluss 35 - verlaufender Richtung von dem dem thermischen Ausdehnungskoeffizienten $\alpha_k$ des Grundkörpers 1 entsprechenden Ausdehnungskoeffizienten auf den dem thermischen Ausdehnungskoeffizienten $\alpha_M$ des Abschlusses 35 entsprechenden Ausdehnungskoeffizienten ansteigt.

Die Anpassungskörper 39 weisen jeweils einen Innenraum auf, der einen Innenraum der daran anschließenden Bohrung 23 über die Durchtrittsöffnung des Abschlusses 35 mit einem Innenraum der Druckzufuhrleitung 25 verbindet. Die Anpassungskörper 39 weisen jeweils eine dem jeweiligen Grundkörper 1 zugewandte Stirnseite auf, die durch eine erste Fügung 11 mit einem die Bohrung 23 umgebenden Bereich der Rückseite des jeweiligen Grundkörpers 1 verbunden ist, und eine vom Grundkörper 1 abgewandte Stirnseite auf, die durch eine zweite Fügung 13 mit der dem Grundkörper 1 zugewandten Stirnseite des Abschlusses 35 verbunden ist. Die ersten und zweiten Fügungen 11, 13 sind vorzugsweise identisch zu den entsprechenden anhand von Fig. 1 beschriebenen ersten und zweiten Fügungen 11, 13 ausgebildet.

Diese Anpassungskörper 39 sind abgesehen von deren auf die Innendurchmesser von Bohrung 23 und Abschluss 35 abgestimmten Innendurchmessern, und deren auf den Außendurchmesser des Abschlusses 35 abgestimmten Außendurchmessern auf die in Verbindung mit den Anpassungskörpern 9 von Fig. 1 beschriebene Weise aufgebaut. Dabei gelten die obigen Bemessungsregeln für die Anzahl N der Schichten $S_i$, Höhe h und Breite d des Anpassungskörpers 39, sowie Schichtdicke s und Breite $d_S$ der Schichten $S_i$ entsprechend.

Fig. 4 zeigt ein weiteres Ausführungsbeispiel eines erfindungsgemäßen Drucksensors. Fig. 5 zeigt eine Vergrößerung des in Fig. 4 eingekreisten Ausschnitts von Fig. 4. Auch dieser Drucksensor umfasst einen keramischen Grundkörper 1 und eine unter Einschluss einer Druckmesskammer 5 auf dem Grundkörper 1 angeordnete Messmembran 41. Die Messmembran 41 besteht aus Keramik. Vorzugsweise wird hierzu der gleiche Werkstoff verwendet, aus dem auch der Grundkörper 1 besteht, insb. Aluminiumoxid ($Al_2O_3$), Siliziumcarbid-Keramik (SiC) oder Spinell.

Der keramische Grundkörper 1 ist in einem metallischen Gehäuse 43 angeordnet, das ein den Grundkörper 1 allseitig außenseitlich umschließendes, vom Grundkörper 1 beabstandetes Gehäusesegment 45 umfasst, an dessen Ende eine sich radial nach innen erstreckende Schulter 47 vorgesehen ist. Die Schulter 47 besteht aus Metall, zum Beispiel aus Edelstahl. Die Schulter 47 ist ein Metallkörper, der mit dem keramischen Grundkörper 1 durch eine druckdichte mechanische Verbindung 49 verbunden ist. Auch diese Verbindung 49 erfolgt über einen Anpassungskörper 51 auf die oben bereits in Verbindung mit der in Fig. 1 dargestellten Verbindung 7 beschriebene Weise, wobei der innere Rand der Schulter 47 an die Stelle des äußeren Randes der metallischen Messmembran 3 von Fig. 1 tritt. In Bezug auf den Anpassungskörper 51, insb. dessen thermischen Ausdehnungskoeffizienten, dessen Aufbau und dessen Abmessungen, gelten die obigen Ausführungen zu dem in Fig. 1 dargestellten Anpassungskörper 9 entsprechend. Der Anpassungskörper 51 ist auch hier ein zu einem Ring geschlossener Anpassungskörper 51 mit rechteckigem Querschnitt, dessen dem Grundkörper 1 zugewandte Stirnseite über eine erste Fügung 11 mit dem äußerem Rand der der Messmembran 41 zugewandten Stirnseite des Grundkörpers 1, und dessen der Schulter 47 zugewandte Stirnseite über eine zweite Fügung 13 mit der dem Grundkörper 1 zugewandten in das Gehäuse 43 hinein weisenden Seite des inneren Randes der Schulter 47 verbunden ist. Auch die erste und die zweite Fügung 11, 13 sind vorzugsweise identisch zu den anhand von Fig. 1 beschriebenen ersten und zweiten Fügungen 11, 13 ausgebildet.

Vorzugsweise ist der äußere Rand des Grundkörpers 1 in axialer Richtung, d.h. parallel zur Flächennormale auf die Messmembran 41, im Gehäuse 43 eingespannt. Hierzu ist die Schulter 47 vorzugsweise als in axialer Richtung federelastisches Element ausgebildet, das mit einem von der Messmembran 41 abgewandten Seite her in das Gehäusesegment 45 eingebrachten Gegenlager 53 zusammenwirkt. Als Gegenlager 53 eignet sich zum Beispiel ein hohlzylindrischer Druckring, der derart in das Gehäuse 43 eingeschraubt wird, dass dessen in Richtung der Messmembran 41 weisende Stirnseite auf einem äußeren Rand der von der Messmembran 41 abgewandten Rückseite des Grundkörpers 1 aufliegt, und den Grundkörper 1 gegen die federelastische Schulter 47 drückt. Diese Variante ist in der linken Hälfte von Fig. 4 dargestellt. Zusätzlich kann zwischen dem Gegenlager 53 und dem äußeren Rand des Grundkörpers 1 eine Spannfeder 55 vorgesehen sein. Diese Variante ist in der rechten Hälfte von Fig. 4 dargestellt.

Die Federelastizität der Schulter 47 lässt sich z. B. durch eine entsprechende Formgebung der Schulter 47 erzielen. Eine in axialer Richtung wirksame Federelastizität der Schulter 47 kann z.B. über eine an eine Steifigkeit des Metalls der Schulter 47 angepasste entsprechend geringe Dicke der Schulter 47 bewirkt werden.

Vorzugsweise ist die Schulter 47 als in radialer Richtung, also senkrecht zur Flächennormale auf die Messmembran 41, federelastisches Element ausgebildet. Auch diese in radialer Richtung wirkende Federelastizität der Schulter 47 lässt sich durch eine entsprechende Formgebung der Schulter 47 erzielen. Hierzu ist die Schulter 47 vorzugsweise als gewellte Scheibe ausgebildet, die mindestens eine konzentrisch zur durch die Mitte der Messmembran 41 verlaufenden Flächennormale auf die Messmembran 41 ausgebildete kreisringförmige Welle 57 aufweist.

Die Schulter 47 besteht sowohl im Hinblick auf die bevorzugte Federelastizität, als auch im Hinblick auf deren exponierte Position als Teil des Gehäuses 43 des Drucksensors, vorzugsweise aus einem federelastischen Edelstahl. Hierzu eignen sich insb. nickelhaltige austenitische rostfreie Stähle, wie z.B. unter der Werkstoffnummer 1.4404 bzw. unter der Bezeichnung 316L geführte Edelstähle.

Die Messmembran 41 ist unter Einschluss der Druckmesskammer 5 auf dem Grundkörper 1 angeordnet. Hierzu ist der äußere Rand der Messmembran 41 über eine weitere druckdichte mechanische Verbindung 59 mit dem inneren, über die druckdichte mechanische Verbindung 49 mit dem Rand des Grundkörpers 1 verbundenen Rand der Schulter 47 verbunden. Auch diese Verbindung 59 erfolgt auf die anhand der Verbindung 7 in Fig. 1 beschriebene Weise. Hierzu ist zwischen dem inneren Rand der Schulter 47 und dem äußeren Rand der Messmembran 41 ein weiterer Anpassungskörper 61 angeordnet. Der weitere Anpassungskörper 61 ist vorzugsweise identisch zu dem Anpassungskörper 51 ausgebildet, und derart auf der Schulter 47 angeordnet, dass dessen thermischer Ausdehnungskoeffizient ausgehend von dem dem Ausdehnungskoeffizienten $\alpha_K$ der Messmembran 41 entsprechenden Ausdehnungskoeffizienten der an die Messmembran 41 angrenzenden äußersten Schicht $S_1$ in Richtung der Schulter 47 von Schicht zu Schicht schrittweise derart ansteigt, dass dessen an die metallische Schulter 47 angrenzende äußerste Schicht $S_N$ einen dem thermischen Ausdehnungskoeffizienten $\alpha_M$ der metallischen Schulter 47 entsprechenden thermischen Ausdehnungskoeffizienten aufweist.

Analog zu den zuvor beschriebenen Verbindungen 7 ist der äußere dem Grundkörper 1 zugewandte Rand der Messmembran 41 durch eine erste Fügung 11 mit einer vom Grundkörper 1 abgewandten Stirnseite des weiteren Anpassungskörpers 61 verbunden, und der innere der Messmembran 41 zugewandte Rand der Schulter 47 ist durch eine zweite Fügung 13 mit einer der Schulter 47 zugewandten Stirnseite des weiteren Anpassungskörpers 61 verbunden. Die erste und die zweite Fügung 11, 13 sind auch hier vorzugsweise identisch zu den entsprechenden anhand von Fig. 1 beschriebenen ersten und zweiten Fügungen 11, 13 ausgebildet.

Dabei bietet die in radialer und vorzugsweise auch in axialer Richtung federelastische Schulter 47 den Vorteil, dass durch sie ggfs. trotz der Anpassung der thermischen Ausdehnungskoeffizienten $\alpha_K$, $\alpha_M$ über die Anpassungskörper 51 und 61 verbleibende temperaturabhängige Restspannungen ausgeglichen werden.

Der in Fig. 4 dargestellte Drucksensor ist als Relativdrucksensor ausgebildet. Hierzu umfasst er eine durch den Grundkörper 1 hindurch verlaufende in der Druckmesskammer 5 mündende Bohrung 63, über die der Druckmesskammer 5 ein Referenzdruck $p_{ref}$, z.B. der Atmosphärendruck, auf den der zu messende Druck bezogen werden soll, zugeführt wird. Alternativ kann er als Absolutdrucksensor ausgebildet sein. In dem Fall entfällt die Bohrung 63, und die unter der Messmembran 41 eingeschlossene Druckmesskammer 5 ist evakuiert.

Ein von außen auf die Messmembran 41 einwirkender Druck p bewirkt eine druckabhängige Durchbiegung der Messmembran 41, die mittels eines elektromechanischen Wandlers erfasst wird. Auch hier kann als Wandler ein kapazitiver Wandler eingesetzt werden, der hier eine auf der Innenseite der Messmembran 41 aufgebrachte Elektrode 65 umfasst, die zusammen mit der auf die der Messmembran 41 zugewandte Stirnseite des Grundkörpers 1 aufgebrachte Gegenelektrode 27 einen Kondensator bildet, der eine von der druckabhängigen Durchbiegung der Messmembran 41 abhängige Kapazität aufweist.

## Bezugszeichenliste

1 Grundkörper
3 Messmembran
5 Druckmesskammer
7 druckdichte mechanische Verbindung
9 Anpassungskörper
11 erste Fügung
13 zweite Fügung
15 Membranbett
17 Rand der Stirnfläche des Grundkörpers
19 Anpassungskörper
21 Innenkontur
23 Bohrung
25 Druckzufuhrleitung
27 Gegenelektrode
29 Druckmittler
31 Trennmembran
33 Druckempfangskammer
35 Abschluss
37 druckdichte mechanische Verbindung
39 Anpassungskörper
41 Messmembran
43 Gehäuse
45 Gehäusewand
47 Schulter
49 druckdichte mechanische Verbindung
51 Anpassungskörper
53 Gegenlager
55 Spannfeder
57 Welle
59 druckdichte mechanische Verbindung
61 Anpassungskörper
63 Bohrung
65 Elektrode

## Patentansprüche

1. Drucksensor, mit

    - einem Grundkörper (1) aus Keramik,
    - einer auf dem Grundkörper (1) angeordneten Messmembran (3, 41),
    - einer im Grundkörper (1) unter der Messmembran (3, 41) eingeschlossenen Druckmesskammer (5), und
    - mindestens einem mit dem Grundkörper (1) über eine druckdichte mechanische Verbindung (7, 37, 49) verbundenen Metallkörper,
    - wobei die druckdichte mechanische Verbindung (7, 37, 49) einen zwischen dem Grundkörper (1) und dem Metallkörper angeordneten Anpassungskörper (9, 19, 39, 51) umfasst,
    - der Anpassungskörper (9, 19, 39, 51) einen thermischen Ausdehnungskoeffizient aufweist, der entlang des Anpassungskörpers (9, 19, 39, 51) in vom Grundkörper (1) zum Metallkörper verlaufender Richtung (z) von einem thermischen Ausdehnungskoeffizienten ($\alpha_k$) der Keramik des Grundkörpers (1) entsprechenden Ausdehnungskoeffizienten auf einen dem thermischen Ausdehnungskoeffizienten ($\alpha_M$) des Metallkörpers entsprechenden Ausdehnungskoeffizienten ansteigt, und
    - der Anpassungskörper (9, 19, 39, 51) durch eine erste Fügung (11) mit dem Grundkörper (1) und durch eine zweite Fügung (13) mit dem Metallkörper verbunden ist,
    - **dadurch gekennzeichnet, dass**
    - der Anpassungskörper (9, 39, 51) in vom Grundkörper (1) zum Metallkörper verlaufender Richtung eine Höhe (h), und senkrecht dazu eine Breite (d) aufweist, und
    - ein Produkt aus einem Verhältnis von der Breite (d) des Anpassungskörpers (9, 39, 51) zur Höhe (h) des Anpassungskörpers (9, 39, 51) und dem Betrag der Differenz ($\Delta\alpha$) der thermischen Ausdehnungskoeffizienten ($\alpha_K$, $\alpha_M$) der Keramik des Grundkörpers (1) und des Metalls des Metallkörpers kleiner als eine Konstante ($\xi$) mit der Dimension 1/K ist, wobei
    - die Konstante ($\xi$) kleiner als 0,1 %/K, insbesondere kleiner 500 ppm/K, insb. kleiner als 250 ppm/K, insb. kleiner als 125 ppm/K, insb. kleiner als 60 ppm/K ist, und/oder
    - die Konstante ($\xi$) gleich einem Quotient aus einem dimensionslosen Verformungsparameter (C) und einer Temperaturdifferenz ($\Delta T$) zwischen einer maximalen und einer minimalen Temperatur ($T_{max}$, $T_{min}$), bei der der Drucksensor eingesetzt werden soll, ist, und der Verformungsparameter kleiner als 4%, insb. kleiner als 2%, insb. kleiner als 1 % ist.

2. Drucksensor, mit

    - einem Grundkörper (1) aus Keramik,
    - einer auf dem Grundkörper (1) angeordneten Messmembran (3, 41),
    - einer im Grundkörper (1) unter der Messmembran (3, 41) eingeschlossenen Druckmesskammer (5), und
    - mindestens einem mit dem Grundkörper (1) über eine druckdichte mechanische Verbindung (7, 37, 49) verbundenen Metallkörper,
    - wobei die druckdichte mechanische Verbindung (7, 37, 49) einen zwischen dem Grundkörper (1) und dem Metallkörper angeordneten Anpassungskörper (9, 19, 39, 51) umfasst,
    - der Anpassungskörper (9, 19, 39, 51) einen thermischen Ausdehnungskoeffizient aufweist, der entlang des Anpassungskörpers (9, 19, 39, 51) in vom Grundkörper (1) zum Metallkörper verlaufender Richtung (z) von einem thermischen Ausdehnungskoeffizienten ($\alpha_k$) der Keramik des Grundkörpers (1) entsprechenden Ausdehnungskoeffizienten auf einen dem thermischen Ausdehnungskoeffizienten ($\alpha_M$) des Metallkörpers entsprechenden Ausdehnungskoeffizienten ansteigt, und

- der Anpassungskörper (9, 19, 39, 51) durch eine erste Fügung (11) mit dem Grundkörper (1) und durch eine zweite Fügung (13) mit dem Metallkörper verbunden ist,

- **dadurch gekennzeichnet, dass**

- - der Anpassungskörper (9, 19, 39, 51) ein aus aufeinander angeordneten Schichten ($S_i$) aufgebauter Anpassungskörper ist,

- die einzelnen Schichten ($S_i$) jeweils eine sich parallel zur Flächennormalen auf die Schicht ($S_i$) erstreckende Schichtdicke (s) und eine sich senkrecht zur Flächennormalen auf die Schicht ($S_i$) erstreckende Breite ($d_s$) aufweisen, und

- das Produkt aus dem Verhältnis der Breite ($d_s$) der jeweiligen Schicht ($S_i$) zu deren Schichtdicke (s) und dem Betrag der Differenz ($\Delta\alpha_s$) der thermischen Ausdehnungskoeffizienten der an diese Schicht ($S_i$) angrenzenden Schichten ($S_{i-1}$, $S_{i+1}$) kleiner als eine Konstante ($\xi$) mit der Dimension 1/K ist, wobei

- die Konstante ($\xi$) kleiner als 0,1%/K, insbesondere kleiner 500 ppm/K, insb. kleiner als 250 ppm/K, insb. kleiner als 125 ppm/K, insb. kleiner als 60 ppm/K ist, und/oder

- die Konstante ($\xi$) gleich einem Quotient aus einem dimensionslosen Verformungsparameter (C) und einer Temperaturdifferenz ($\Delta T$) zwischen einer maximalen und einer minimalen Temperatur ($T_{max}$, $T_{min}$), bei der der Drucksensor eingesetzt werden soll, ist, und der Verformungsparameter kleiner als 4%, insb. kleiner als 2%, insb. kleiner als 1% ist.

3. Drucksensor nach Anspruch 1 oder 2, **dadurch gekennzeichnet, dass**

- der Anpassungskörper (9, 19, 39, 51) aufeinander angeordnete Schichten ($S_i$) unterschiedlicher Zusammensetzung, insb. durch Lasersintern von metallische und/oder keramische Anteile enthaltenden Pulverschichten aufeinander aufgebrachte Schichten, aufweist, und

- die Schichten ($S_i$) einen Keramikanteil aufweisen, der größer gleich 0 % und kleiner gleich 100 % ist, und einen Metallanteil aufweisen, der größer gleich 0 % und kleiner gleich 100 % ist, wobei

- der Keramikanteil in vom Grundkörper (1) zum Metallkörper hin verlaufender Richtung (z) von Schicht zu Schicht abnimmt, und

- der Metallanteil in vom Grundkörper (1) zum Metallkörper hin verlaufender Richtung (z) von Schicht zu Schicht ansteigt.

4. Drucksensor nach Anspruch 1 oder 2, **dadurch gekennzeichnet, dass**

- der Anpassungskörper (9, 19, 39, 51) ein aus Schichten aufgebauter Sinterkörper ist, und die erste Fügung (11) eine durch Aufsintern, insb. durch Lasersintern, einer dem Grundkörper (1) zugewandten äußersten Schicht ($S_1$) des Anpassungskörpers (9, 19, 39, 51) auf dem Grundkörper (1) gebildete Fügung ist, oder

- die erste Fügung (11) eine Aktivhartlötung, insb. eine mittels eines ternären eine Zr-Ni-Legierung und Titan aufweisenden Aktivhartlots ausgeführte Aktivhartlötung ist, oder

- die erste Fügung (11) eine Glaslötung ist.

5. Drucksensor nach Anspruch 1 oder 2, **dadurch gekennzeichnet, dass** die zweite Fügung (13) eine Schweißung oder eine Glaslötung ist.

6. Drucksensor nach Anspruch 1 oder 2, **dadurch gekennzeichnet, dass**

- die Messmembran (3) aus Metall besteht und einer der Metallkörper ist, und

- ein äußerer Rand einer der Messmembran (3) zugewandten Stirnseite des Grundkörpers (1) über die erste Fügung (11), den Anpassungskörper (9, 19) und die zweite Fügung (13) mit einem äußeren Rand der dem Grundkörper (1) zugewandten Seite der Messmembran (3) verbunden ist.

7. Drucksensor nach Anspruch 6, **dadurch gekennzeichnet, dass**

- der Anpassungskörper (9) ein zu einem Ring geschlossener Anpassungskörper mit rechteckigem Querschnitt ist, oder

- eine der Messmembran (3) zugewandte Stirnseite des Grundkörpers (1) einen als Membranbett (15) ausgebildeten Bereich aufweist, und der Anpassungskörper (19) eine die Druckmesskammer (5) außenseitlich umgebende Innenkontur (21) ausweist, durch die das Membranbett (15) nach außen fortgesetzt ist.

8. Drucksensor nach Anspruch 1 oder 2, **dadurch gekennzeichnet, dass**

- im Grundkörper (1) eine durchgehende, in der Druckmesskammer (5) mündende Bohrung (23) vorgesehen ist,
- eine an die Bohrung (23) angeschlossenen Druckzufuhrleitung (25) vorgesehen ist,
- die Druckzufuhrleitung (25) an deren dem Grundkörper (1) zugewandten Ende einen metallischen, eine Durchtrittsöffnung aufweisenden Abschluss (35) aufweist, der einen der Metallkörper bildet,
- der Grundkörper (1) über die erste Fügung (13), den Anpassungskörper (39) und die zweite Fügung (11) mit dem Abschluss (35) verbunden ist, und
- der Anpassungskörper (39) einen Innenraum aufweist, durch den ein Innenraum der Bohrung (23) über die Durchtrittsöffnung im Abschluss (35) mit einem Innenraum der Druckzufuhrleitung (25) verbunden ist.

9. Drucksensor nach Anspruch 1 oder 2, **dadurch gekennzeichnet, dass**

- der Grundkörper (1) in einem Gehäuse (43) angeordnet ist,
- das Gehäuse (43) ein den Grundkörper (1) außenseitlich umschließendes, vom Grundkörper (1) beabstandetes Gehäusesegment (45), und eine damit verbundene, sich radial nach innen erstreckende, einen der Metallkörper bildende Schulter (47) aus Metall, insb. aus Edelstahl, insb. aus nickelhaltigem austenitischem Edelstahl, umfasst, und
- ein innerer Rand der Schulter (47) über die druckdichte Verbindung (49) mit einem äußeren der Schulter (47) zugewandten Rand des Grundkörpers (1) verbunden ist, wobei
- eine dem Grundkörper (1) zugewandte Stirnseite des Anpassungskörpers (51) über die erste Fügung (11) mit einem äußeren Rand der der Schulter (47) zugewandten Stirnseite des Grundkörpers (1) verbunden ist, und
- eine der Schulter (47) zugewandte Stirnseite des Anpassungskörpers (51) über die zweite Fügung (13) mit einer in das Gehäuse (43) hinein weisenden Seite eines inneren Randes der Schulter (47) verbunden ist.

10. Drucksensor nach Anspruch 9, **dadurch gekennzeichnet, dass**

- die Messmembran (41) aus Keramik besteht,
- ein äußerer Rand der Messmembran (41) über eine druckdichte Verbindung (59) mit einer vom Grundkörper (1) abgewandten Seite des inneren Randes der Schulter (47) verbunden ist,
- die druckdichte Verbindung (59) über einen weiteren Anpassungskörper (61), insb. einen identisch zu dem zwischen Grundkörper (1) und Schulter (47) angeordneten Anpassungskörper (51) ausgebildeten weiteren Anpassungskörper, erfolgt,
- der weitere Anpassungskörper (61) einen thermischen Ausdehnungskoeffizient aufweist, der in von der Messmembran (41) zur Schulter (47) verlaufender Richtung von einem einem thermischen Ausdehnungskoeffizienten $(\alpha_M)$ der Keramik der Messmembran (41) entsprechenden Ausdehnungskoeffizienten auf einen dem thermischen Ausdehnungskoeffizienten $(\alpha_M)$ des Metalls der Schulter (47) entsprechenden Ausdehnungskoeffizienten ansteigt, und
- der weitere Anpassungskörper (61) eine der Messmembran (41) zugewandte Stirnseite aufweist, die durch eine erste Fügung (11), insb. eine durch Aufsintern einer äußeren Schicht des Anpassungskörpers (61) auf der Messmembran (41) gebildete Fügung, mit der Messmembran (41) verbunden ist, und eine der Schulter (47) zugewandte Stirnseite aufweist, die durch eine zweite Fügung (13), insb. eine Schweißung, mit der Schulter (47) verbunden ist.

11. Drucksensor nach Anspruch 9 oder 10, **dadurch gekennzeichnet, dass** die Schulter (47) in parallel und/oder senkrecht zur Flächennormalen auf die Messmembran (41) verlaufender Richtung federelastisch ist.

12. Drucksensor nach Anspruch 1 oder 2, **dadurch gekennzeichnet, dass**

- der Anpassungskörper (9, 19, 39, 51) ein aus Schichten $(S_i)$ aufgebauter Anpassungskörper ist,
- eine Anzahl (N) der Schichten $(S_i)$ größer gleich einer Differenz $(\Delta\alpha)$ zwischen dem thermischen Ausdehnungskoeffizienten $(\alpha_M)$ des Metallkörpers und dem thermischen Ausdehnungskoeffizienten $(\alpha_K)$ des keramischen Grundkörpers (1) geteilt durch 2 ppm/K, insbesondere größer gleich der Differenz $(\Delta\alpha)$ geteilt durch 1 ppm/K, insb. größer gleich dem zweifachen der Differenz $(\Delta\alpha)$ geteilt durch 1 ppm/K, ist.

13. Drucksensor nach Anspruch 1 oder 2, **dadurch gekennzeichnet, dass**

- der Anpassungskörper (9, 19, 39, 51) ein aus Schichten $(S_i)$ aufgebauter Anpassungskörper ist, und
- die Schichten $(S_i)$ eine Schichtdicke (s) von nicht weniger als 10 $\mu$m, insbesondere nicht weniger als 20 $\mu$m, insb. nicht weniger als 40 $\mu$m aufweisen, und von nicht mehr als 400 $\mu$m, insbesondere nicht mehr als 200 $\mu$m, insb. nicht mehr als 100 $\mu$m aufweisen.

**Claims**

1. Pressure sensor, with

   - a meter body (1) made of ceramic,
   - a process isolating diaphragm (3, 41) arranged on the meter body (1),
   - a pressure measurement chamber (5) enclosed in the meter body (1) under the process isolating diaphragm (3, 41), and
   - at least one metal body connected to the meter body (1) via a pressure-tight mechanical connection (7, 37, 49),
   - wherein the pressure-tight mechanical connection (7, 37, 49) comprises an adaptation body (9, 19, 39, 51) arranged between the meter body (1) and the metal body,
   - wherein the adaptation body (9, 19, 39, 51) has a thermal expansion coefficient which increases
   - along the adaptation body (9, 19, 39, 51) in the direction (z) running from the meter body (1) to the metal body - from an expansion coefficient that corresponds to a thermal expansion coefficient ($\sigma_K$) of the ceramic of the meter body (1) to an expansion coefficient that corresponds to the thermal expansion coefficient ($\sigma_M$) of the metal body, and
   - wherein the adaptation body (9, 19, 39, 51) is joined to the meter body (1) by means of a first joint (11) and to the metal body by means of a second joint (13), **characterized in that**
   - the adaptation body (9, 39, 51) has a height (h) in the direction running from the meter body (1) to the metal body, and a width (d) perpendicular to this, and
   - a product of a ratio of the width (d) of the adaptation body (9, 39, 51) to the height (h) of the adaptation body (9, 39, 51) and the value of the difference ($\Delta\sigma$) of the thermal coefficients ($\sigma_K$, $\sigma_M$) of the ceramic of the meter body (1) and of the metal of the metal body is less than a constant ($\xi$) with the dimension 1/K, wherein
   - the constant ($\xi$) is less than 0.1 %/K, particularly less than 500 ppm/K, particularly less than 250 ppm/K, particularly less than 125 ppm/K, particularly less than 60 ppm/K, and/or
   - the constant ($\xi$) is equal to a quotient of a dimensionless deformation parameter (C) and a temperature difference ($\Delta T$) between a maximum temperature and a minimum temperature ($T_{max}$, $T_{min}$) at which the pressure sensor is to be used, and the deformation parameter is less than 4 %, particularly less than 2 %, particularly less than 1 %.

2. Pressure sensor, with

   - a meter body (1) made of ceramic,
   - a process isolating diaphragm (3, 41) arranged on the meter body (1),
   - a pressure measurement chamber (5) enclosed in the meter body (1) under the process isolating diaphragm (3, 41), and
   - at least one metal body connected to the meter body (1) via a pressure-tight mechanical connection (7, 37, 49),
   - wherein the pressure-tight mechanical connection (7, 37, 49) comprises an adaptation body (9, 19, 39, 51) arranged between the meter body (1) and the metal body,
   - wherein the adaptation body (9, 19, 39, 51) has a thermal expansion coefficient which increases
   - along the adaptation body (9, 19, 39, 51) in the direction (z) running from the meter body (1) to the metal body - from an expansion coefficient that corresponds to a thermal expansion coefficient ($\sigma_K$) of the ceramic of the meter body (1) to an expansion coefficient that corresponds to the thermal expansion coefficient ($\sigma_M$) of the metal body, and
   - wherein the adaptation body (9, 19, 39, 51) is joined to the meter body (1) by means of a first joint (11) and to the metal body by means of a second joint (13), **characterized in that**

      -- the adaptation body (9, 19, 39, 51) is an adaptation body made from layers (Si) arranged on top of one another,
      -- the individual layers (Si) each have a layer thickness (s) extending parallel to the surface normal on the layer (Si) and a width ($d_s$) extending such that it is perpendicular to the surface normal on the layer (Si), and

   - the product of the ratio of the width ($d_s$) of the individual layer (Si) to the thickness of the layer (s) and the value of the difference ($\Delta\sigma_s$) of the thermal expansion coefficients of the layers ($S_{i-1}$, $S_{i+1}$) bordering on this layer (Si) is less than a constant ($\xi$) with the dimension 1/K, wherein
   - the constant ($\xi$) is less than 0.1 %/K, particularly less than 500 ppm/K, particularly less than 250 ppm/K, particularly less than 125 ppm/K, particularly less than 60 ppm/K, and/or
   - the constant ($\xi$) is equal to a quotient of a dimensionless deformation parameter (C) and a temperature difference ($\Delta T$) between a maximum temperature and a minimum temperature ($T_{max}$, $T_{min}$) at which the pressure sensor is to be used, and the deformation parameter is less than 4 %, particularly less than 2 %, particularly less than 1 %.

3. Pressure sensor as claimed in Claim 1 or 2, **characterized in that**

- the adaptation body (9, 19, 39, 51) has layers (Si) of a different composition arranged on top of one another, particularly layers that are deposited on top of one another by means of laser-sintering powder layers containing metal and/or ceramic parts, and
- the layers (Si) have a ceramic content, which is greater or equal to 0 % and is less than or equal to 100 %, and have a metal content, which is greater or equal to 0 % and is less than or equal to 100 %,
- the ceramic content decreases from layer to layer in the direction (z) extending from the meter body (1) towards the metal body, and
- the metal content increases from layer to layer in the direction (z) extending from the meter body (1) towards the metal body.

4. Pressure sensor as claimed in Claim 1 or 2, **characterized in that**

- the adaptation body (9, 19, 39, 51) is a sintered body comprised of layers, and the first joint (11) is a joint formed by the sintering, particularly laser-sintering, of an outermost layer (Si) of the adaptation body (9, 19, 39, 51) on the meter body (1), said layer facing towards the meter body (1) or
- the first joint (11) is an active brazed joint, particularly an active brazed joint created using a ternary solder that contains a Zr-Ni alloy and titanium, or
- the first joint (11) is a glass brazed joint.

5. Pressure sensor as claimed in Claim 1 or 2, **characterized in that** the second joint (13) is a weld or a glass brazed joint.

6. Pressure sensor as claimed in Claim 1 or 2, **characterized in that**

- the process isolating diaphragm (3) is made from metal and is one of the metal bodies, and
- an outer edge of a front face of the meter body (1) facing toward the process isolating diaphragm (3) is connected to an outer edge of the side of the process isolating diaphragm (3) facing toward the meter body (1) by means of the first joint (11), the adaptation body (9, 19) and the second joint (13).

7. Pressure sensor as claimed in Claim 6, **characterized in that**

- the adaptation body (9) is an adaptation body that is closed to form a ring and has a square cross-section, or
- a front face of the meter body (1) facing toward the process isolating diaphragm (3) has an area that is designed as a diaphragm bed (15), and the adaptation body (19) has an interior contour (21) that surrounds the pressure measurement chamber (5) on the outside and continues the diaphragm bed towards the exterior.

8. Pressure sensor as claimed in Claim 1 or 2, **characterized in that**

- a continuous borehole (23) is provided in the meter body (1) and enters into the pressure measurement chamber (5),
- a pressure supply pipe (25) that is connected to the borehole (23) is provided,
- at the end of the pressure supply pipe (25) that faces towards the meter body (1) the pressure supply pipe (25) has a terminal section (35) that features an opening, said terminal section forming one of the metal bodies,
- the meter body (1) is connected to the terminal section (35) by means of the first joint (11), the adaptation body (39) and the second joint (13), and
- the adaptation body (39) has an interior space through which an interior space of the borehole (23) is connected to an interior space of the pressure supply line (25) by means of the opening in the terminal section (35).

9. Pressure sensor as claimed in Claim 1 or 2, **characterized in that**

- the meter body (1) is arranged in a housing (43),
- the housing (43) has a housing segment (45) that is situated at a distance from the meter body (1) and surrounds the meter body (1) on the outside, and a shoulder (47) which is connected to said segment, extends radially inwards and forms one of the metal bodies, wherein said shoulder is made from metal, particularly stainless steel, particularly an austenitic stainless steel containing nickel, and
- an inner edge of the shoulder (47) is connected to an outer edge of the meter body (1) that faces towards the shoulder (47) by means of a pressure-tight connection (49), wherein
- a front face of the adaptation body (51) that faces towards the meter body (1) is connected to an outer edge of the front face of the meter body (1) that faces towards the shoulder (47) by means of the first joint (11), and
- a front face of the adaptation body (51) that faces towards the shoulder (47) is connected to a side of the inner edge of the shoulder (47) that points into the housing (43) by means of the second joint (13).

**10.** Pressure sensor as claimed in Claim 9, **characterized in that**

- the process isolating diaphragm (41) is made from ceramic,
- an outer edge of the process isolating diaphragm (41) is connected to a side of the inner edge of the shoulder (47) that faces away from the meter body (1) by means of a pressure-tight connection,
- the pressure-tight connection (59) is established by means of an additional adaptation body (61), particularly an additional adaptation body that is identical in design to the adaptation body (51) that is arranged between the meter body (1) and the shoulder (47),
- the additional adaptation body (61) has a thermal expansion coefficient which increases - in the direction of the process isolating diaphragm (41) towards the shoulder (47) - from an expansion coefficient that corresponds to the thermal expansion coefficient ($\sigma_M$) of the ceramic of the process isolating diaphragm (41) to an expansion coefficient that corresponds to the thermal expansion coefficient ($\sigma_M$) of the metal of the shoulder (47), and
- the additional adaptation body (61) has a front face that faces towards the process isolating diaphragm (41), wherein said face is connected to the process isolating diaphragm (41) via a first joint (11), particularly a joint created by the sintering of an outer layer of the adaptation body (61) on the process isolating diaphragm (41), and has a front face that faces towards the shoulder (47), said face being connected to the shoulder (47) by means of a second joint (13), particularly a weld.

**11.** Pressure sensor as claimed in Claim 9 or 10, **characterized in that** the shoulder (47) is elastic in the direction parallel to and/or perpendicular to the surface normal on the process isolating diaphragm (41).

**12.** Pressure sensor as claimed in Claim 1 or 2, **characterized in that**

- the adaptation body (9, 19, 39, 51) is an adaptation body made from layers (Si), and
- a number (N) of the layers (Si) is greater than or equal to a difference ($\Delta\sigma$) between the thermal expansion coefficient ($\sigma_M$) of the metal body and the thermal expansion coefficient ($\sigma_K$) of the ceramic meter body (1) divided by 2 ppm/K, particularly greater than or equal to the difference ($\Delta\sigma$) divided by 1 ppm/K, particularly greater than or equal to double the difference ($\Delta\sigma$) divided by 1 ppm/K.

**13.** Pressure sensor as claimed in Claim 1 or 2, **characterized in that**

- the adaptation body (9, 19, 39, 51) is an adaptation body made from layers (Si), and
- the layers (Si) have a layer thickness (s) of not less than 10 $\mu$m, particularly not less than 20 $\mu$m, particularly not less than 40 $\mu$m, and of not more than 400 $\mu$m, particularly not more than 200 $\mu$m, particularly not more than 100 $\mu$m.

## Revendications

**1.** Capteur de pression, avec

- un corps de base (1) en céramique,
- une membrane de mesure (3, 41) disposée sur le corps de base (1),
- une chambre de mesure de pression (5) incluse dans le corps de base (1) sous la membrane de mesure (3, 41), et
- au moins un corps métallique relié avec le corps de base (1) au moyen d'une liaison mécanique (7, 37, 49) étanche à la pression,
- la liaison mécanique (7, 37, 49) étanche à la pression comprenant un corps d'adaptation (9, 19, 39, 51) disposé entre le corps de base (1) et le corps métallique,
- le corps d'adaptation (9, 19, 39, 51) présentant un coefficient de dilatation thermique, qui croît
- le long du corps d'adaptation (9, 19, 39, 51) dans une direction (z) s'étendant du corps de base (1) au corps métallique - d'un coefficient de dilatation correspondant au coefficient de dilatation thermique ($\sigma_K$) de la céramique du corps de base (1) à un coefficient de dilatation correspondant au coefficient de dilatation thermique ($\sigma_M$) du corps métallique, et
- le corps d'adaptation (9, 19, 39, 51) étant relié à travers une première jonction (11) avec le corps de base (1) et à travers une deuxième jonction (13) avec le corps métallique, **caractérisé** en ce que/qu'
- le corps d'adaptation (9, 19, 39, 51) présente dans la direction s'étendant du corps de base (1) au corps métallique une hauteur (h), et perpendiculairement à cela, une largeur (d), et
- un produit d'un rapport entre la largeur (d) du corps d'adaptation (9, 39, 51) et la hauteur (h) du corps d'adaptation (9, 39, 51) et le montant de la différence ($\Delta\sigma$) des coefficients de dilatation thermique ($\sigma_K$, $\sigma_M$) de la céramique du corps de base (1) et du métal du corps métallique est inférieur à une constante ($\xi$) avec la dimension 1/K, où
- la constante ($\xi$) est inférieure à 0,1 %/K, notamment inférieure à 500 ppm/K, notamment inférieure à 250 ppm/K, notamment inférieure à 125 ppm/K, notamment inférieure à 60 ppm/K, et/ou

- la constante ($\xi$) est égale à un quotient d'un paramètre de déformation (C) adimensionnel et une différence de température ($\Delta T$) entre une température maximale et une température minimale ($T_{max}$, $T_{min}$), pour laquelle le capteur de pression doit être utilisé, et le paramètre de déformation est inférieur à 4 %, notamment inférieur à 2 %, notamment inférieur à 1 %.

2. Capteur de pression, avec

- un corps de base (1) en céramique,
- une membrane de mesure (3, 41) disposée sur le corps de base (1),
- une chambre de mesure de pression (5) incluse dans le corps de base (1) sous la membrane de mesure (3, 41), et
- au moins un corps métallique relié avec le corps de base (1) au moyen d'une liaison mécanique (7, 37, 49) étanche à la pression,
- la liaison mécanique (7, 37, 49) étanche à la pression comprenant un corps d'adaptation disposé entre le corps de base (1) et le corps métallique,
- le corps d'adaptation (9, 19, 39, 51) présentant un coefficient de dilatation thermique, qui croît
- le long du corps d'adaptation (9, 19, 39, 51) dans une direction (z) s'étendant du corps de base (1) au corps métallique - d'un coefficient de dilatation correspondant au coefficient de dilatation thermique ($\sigma_K$) de la céramique du corps de base (1)) à un coefficient de dilatation correspondant au coefficient de dilatation thermique ($\sigma_M$) du corps métallique, et
- le corps d'adaptation (9, 19, 39, 51) étant relié à travers une première jonction (11) avec le corps de base (1) et à travers une deuxième jonction (13) avec le corps métallique,
- **caractérisé** en ce que/qu'

-- le corps d'adaptation (9, 19, 39, 51) est un corps d'adaptation constitué de couches (Si) superposées,
-- les différentes couches (Si) présentent chacune une épaisseur de couche (s) s'étendant parallèlement à la normale de surface sur la couche (Si) et une largeur ($d_s$) s'étendant perpendiculairement à la normale de surface sur la couche (Si), et

- le produit du rapport entre la largeur ($d_s$) de la couche (Si) respective et son épaisseur de couche (s) et le montant de la différence ($\Delta\sigma_s$) des coefficients de dilatation thermique des couches ($S_{i-1}$, $S_{i+1}$) avoisinant cette couche (Si) est inférieur à une constante ($\xi$) avec la dimension 1/K, où

- la constante ($\xi$) est inférieure à 0,1 %/K, notamment inférieure à 500 ppm/K, notamment inférieure à 250 ppm/K, notamment inférieure à 125 ppm/K, notamment inférieure à 60 ppm/K, et/ou
- la constante ($\xi$) est égale à un quotient d'un paramètre de déformation (C) adimensionnel et une différence de température ($\Delta T$) entre une température maximale et une température minimale ($T_{max}$, $T_{min}$), pour laquelle le capteur de pression doit être utilisé, et le paramètre de déformation est inférieur à 4 %, notamment inférieur à 2 %, notamment inférieur à 1 %.

3. Capteur de pression selon la revendication 1 ou 2, **caractérisé en ce que**

- le corps d'adaptation (9, 19, 39, 51) présente des couches (Si) superposées de composition différente, notamment des couches appliquées de manière superposée par frittage au laser de couches de poudre contenant des parts métalliques et/ou céramiques, et
- les couches (Si) présentent une part de céramique, qui est supérieure ou égale à 0 % et inférieure ou égale à 100 %, et présentent une part de métal, qui est supérieure ou égale à 0 % et inférieure ou égale à 100 %,
- la part de céramique diminuant de couche en couche en direction (z) allant du corps de base (1) vers le corps métallique, et
- la part de métal augmentant de couche en couche en direction (z) allant du corps de base (1) vers le corps métallique.

4. Capteur de pression selon la revendication 1 ou 2, **caractérisé en ce que**

- le corps d'adaptation (9, 19, 39, 51) est un corps fritté composé de couches, et la première jonction (11) est une jonction formée par frittage, notamment par frittage au laser, d'une couche ($S_1$) la plus extérieure faisant face au corps de base (1) du corps d'adaptation (9, 19, 39, 51) sur le corps de base (1), ou
- la première jonction (11) est une brasure active, notamment une brasure active exécutée au moyen d'un métal d'apport de brasage fort présentant un alliage ternaire de Zr-Ni et du titane, ou
- la première jonction (11) est une brasure de verre.

5. Capteur de pression selon la revendication 1 ou 2, **caractérisé en ce que** la deuxième jonction (13) est un soudage ou une brasure de verre.

**6.** Capteur de pression selon la revendication 1 ou 2, **caractérisé en ce que**

- la membrane de mesure (3) est en métal et constitue l'un des corps métalliques , et
- un bord extérieur d'une face frontale du corps de base (1), laquelle face est orientée vers la membrane de mesure (3), est relié via la première jonction (11), le corps d'adaptation (9, 19) et la deuxième jonction (13) avec un bord extérieur du côté de la membrane (3) de mesure orienté vers le corps de base (1).

**7.** Capteur de pression selon la revendication 6, **caractérisé en ce que**

- le corps d'adaptation (9) est un corps d'adaptation fermé en anneau et présentant une section rectangulaire, ou
- une face frontale du corps de base (1), laquelle face est orientée vers la membrane de mesure (3), présente une zone conçue en tant que lit de membrane (15) et le corps d'adaptation (19) présente un contour intérieur (21) entourant à l'extérieur la chambre de mesure de pression (5), contour à travers lequel le lit de membrane est prolongé vers l'extérieur.

**8.** Capteur de pression selon la revendication 1 ou 2, **caractérisé** en ce que/qu'

- est prévu dans le corps de base (1) un alésage traversant (23), débouchant dans la chambre de mesure de pression (5),
- est prévue une conduite d'alimentation de pression (25) raccordée à l'alésage (23),
- la conduite d'alimentation de pression (25) forme en son extrémité faisant face au corps de base (1) une partie terminale (35) métallique comportant une ouverture de passage, laquelle partie forme un corps métallique,
- le corps de base (1) est relié via la première jonction (11), le corps d'adaptation (39) et la deuxième jonction (13) avec la partie terminale (35), et
- le corps d'adaptation (39) présente un espace intérieur, à travers lequel un espace intérieur de l'alésage (23) est relié via l'ouverture de passage présente dans la partie terminale (35) avec un espace intérieur de la conduite d'alimentation de pression (25).

**9.** Capteur de pression selon la revendication 1 ou 2, **caractérisé en ce que**

- le corps de base (1) est disposé dans un boîtier (43),
- le boîtier (43) comprend un segment de boîtier (45) situé à distance du corps de base (1) et entourant à l'extérieur le corps de base (1), et un épaulement (47) en métal, notamment en acier inoxydable, notamment en acier inoxydable austénitique au nickel, formant un corps métallique, lequel épaulement est relié avec le segment et s'étend radialement vers l'intérieur, et
- un bord intérieur de l'épaulement (47) est relié via la liaison étanche à la pression (49) avec un bord extérieur du corps de base (1) faisant face à l'épaulement (47), pour lequel
- une face frontale du corps d'adaptation (51), laquelle face est orientée vers le corps de base (1), est reliée via la première jonction (11) avec un bord extérieur de la face frontale du corps de base (1), laquelle face est orientée vers l'épaulement (47), et
- une face frontale du corps d'adaptation (51), laquelle face est orientée vers l'épaulement (47), est reliée via la deuxième jonction (13) avec un côté - orienté vers l'intérieur du boîtier (43) - d'un bord intérieur de l'épaulement (47).

**10.** Capteur de pression selon la revendication 9, **caractérisé en ce que**

- la membrane de mesure (41) est en céramique,
- un bord extérieur de la membrane de mesure (41) est relié via une liaison étanche à la pression (59) avec un côté - situé à l'opposé du corps de base (1) - du bord intérieur de l'épaulement (47),
- la liaison étanche à la pression (59) est réalisée au moyen d'un corps d'adaptation (61) supplémentaire, notamment un corps d'adaptation supplémentaire constitué de manière identique au corps d'adaptation (51) disposé entre le corps de base (1) et l'épaulement (47),
- le corps d'adaptation (61) supplémentaire présente un coefficient de dilatation thermique, qui croît - en direction de la membrane de mesure (41) vers l'épaulement (47) - d'un coefficient de dilatation thermique correspondant au coefficient de dilatation thermique ($\sigma_M$) de la céramique de la membrane de mesure (41) à un coefficient de dilatation thermique correspondant au coefficient de dilatation thermique ($\sigma_M$) du métal de l'épaulement (47), et
- le corps d'adaptation (61) supplémentaire présente une face frontale orientée vers la membrane de mesure (41), laquelle face est reliée avec la membrane de mesure (41) via une première jonction (11), notamment une jonction formée par frittage d'une couche extérieure du corps d'adaptation (61) sur la membrane de mesure (41).

**11.** Capteur de pression selon la revendication 9 ou 10, **caractérisé en ce que** l'épaulement (47) est élastique dans la direction parallèle et/ou perpendiculaire à la normale de surface sur la membrane de mesure (41).

**12.** Capteur de pression selon la revendication 1 ou 2, **caractérisé** en ce que/qu'

    - le corps d'adaptation (9, 19, 39, 51) est un corps d'adaptation composé de couches (Si), et
    - un nombre (N) parmi les couches (Si) est supérieur ou égal à une différence ($\Delta\sigma$) entre le coefficient de dilatation thermique ($\sigma_M$) du corps métallique et le coefficient de dilatation thermique ($\sigma_K$) du corps de base (1) céramique, divisée par 2 ppm/K, notamment supérieur ou égal à la différence ($\Delta\sigma$) divisée par 1 ppm/K, notamment supérieur ou égal au double de la différence ($\Delta\sigma$) divisée par 1 ppm/K.

**13.** Capteur de pression selon la revendication 1 ou 2, **caractérisé en ce que**

    - le corps d'adaptation (9, 19, 39, 51) est un corps d'adaptation composé de couches (Si), et
    - les couches (Si) présentent une épaisseur de couche (s) d'au moins 10 $\mu$m, notamment d'au moins 20 $\mu$m, notamment d'au moins 40 $\mu$m, et d'au plus 400 $\mu$m, notamment d'au plus 200 $\mu$m, notamment d'au plus 100 $\mu$m.

EP 3 134 374 B1

Fig. 1

20

Fig. 3

Fig. 2

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6418793 B1
- WO 2014049119 A1
- WO 2014049119 A
- US 3305923 A
- US 2007214865 A1
- EP 0490807 A2
- EP 0627983 B1

**In der Beschreibung aufgeführte Nicht-Patentliteratur**

- Selektives Lasersintern von metallisch/keramischen Schichtstrukturen. *IMW- Industriemitteilung,* 2004